(19) **Europäisches Patentamt**
**European Patent Office**
**Office européen des brevets**

(11) **EP 3 846 359 B1**

(12) **FASCICULE DE BREVET EUROPEEN**

(45) Date de publication et mention de la délivrance du brevet:
**15.01.2025 Bulletin 2025/03**

(21) Numéro de dépôt: **20217976.8**

(22) Date de dépôt: **31.12.2020**

(51) Classification Internationale des Brevets (IPC):
*H04B 7/185* (2006.01)    *G01S 5/02* (2010.01)
*G01S 5/14* (2006.01)

(52) Classification Coopérative des Brevets (CPC):
**G01S 5/0246; G01S 5/0231; G01S 5/0249; G01S 5/14**

(54) **PROCÉDÉS ET DISPOSITIFS DE GÉOLOCALISATION D'UN PREMIER TERMINAL DE TÉLÉCOMMUNICATION SATELLITE, PROGRAMMES D'ORDINATEUR ASSOCIÉS**

VERFAHREN UND VORRICHTUNGEN ZUR GEOLOKALISIERUNG EINES ERSTEN SATELLITEN-TELEKOMMUNIKATIONSENDGERÄTS, UND ENTSPRECHENDE COMPUTERPROGRAMME

METHODS AND DEVICES FOR GEOPOSITIONING A FIRST SATELLITE TELECOMMUNICATION TERMINAL, ASSOCIATED COMPUTER PROGRAMS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.12.2019 FR 1915767**

(43) Date de publication de la demande:
**07.07.2021 Bulletin 2021/27**

(73) Titulaire: **THALES**
**92400 Courbevoie (FR)**

(72) Inventeurs:
• **MOLIERE, Renaud**
**92622 GENNEVILLIERS CEDEX (FR)**
• **DAVID, Christophe**
**92622 GENNEVILLIERS CEDEX (FR)**

(74) Mandataire: **Lavoix**
**2, place d'Estienne d'Orves**
**75441 Paris Cedex 09 (FR)**

(56) Documents cités:
EP-A1- 2 784 534    WO-A1-2019/005436
US-A- 6 028 551    US-A1- 2018 095 156

**Description**

La présente invention concerne le domaine de la géolocalisation d'un terminal de télécommunication satellite utilisant un satellite défilant transparent.

On connait des documents US 2018/095156 A1, WO 2019/005436 A1, US 6 028 551 A des procédés de géolocalisation d'un premier terminal de télécommunication satellite.

On connait en outre du document EP 2 784 534 A1 un procédé de géolocalisation d'un premier terminal de télécommunication satellite utilisant un satellite géostationnaire et non un satellite défilant.

On entend par « satellite défilant » un satellite non géostationnaire, i.e. dont l'orbite circulaire est distincte de 35786 km : par exemple un satellite dans une constellation défilante de type LEO (en anglais « Low earth orbit »), MEO (« medium earth orbit ») ou HEO (« Highly elliptical orbit »). On entend par « satellite transparent » un satellite dont le traitement des signaux se limite à une amplification et à une conversion de fréquentielle entre les liaisons montantes et descendantes. La valeur de cette conversion fréquentielle est connue.

La présente invention se rapporte à un procédé de géolocalisation d'un premier terminal de télécommunication satellite en fonction de signaux échangés par ledit premier terminal de télécommunication, sur une liaison de télécommunication satellite via un satellite défilant transparent, avec un deuxième terminal de télécommunication satellite dont la localisation est connue.

L'obtention de la position d'un terminal de télécommunication par une solution de type GNSS n'étant pas toujours disponible ou pas toujours diffusable par voie radio, il peut s'avérer nécessaire de localiser un terminal de télécommunications satellite, appartenant au réseau de télécommunications satellites notamment, par un autre moyen.

Il existe notamment des méthodes de goniométrie déployées au niveau des satellites. En exploitant les décalages temporels des signaux reçus par différents capteurs, la source d'émission peut être localisée. Cette méthode présente l'inconvénient de nécessiter plusieurs antennes et de devoir s'opérer dans le segment spatial. Il existe donc un besoin de géolocaliser de façon simple un terminal de télécommunications satellites.

A cet effet, suivant un premier aspect, l'invention propose un procédé de géolocalisation selon la revendication 1.

La présente invention permettant la géolocalisation du premier terminal par le deuxième terminal ne nécessite pas d'échange explicite de position, elle permet de localiser un terminal de façon passive, sans message explicite, sans créer de changement au niveau de la forme d'onde ; en outre, elle ne nécessite qu'une seule antenne.

La présente invention exploite les évolutions temporelles d'un ou de plusieurs paramètres radiofréquences de la liaison générées par les constellations défilantes transparentes et dépendantes de la position du premier terminal.

Suivant un deuxième aspect, l'invention propose un procédé de géolocalisation selon la revendication 2.

Suivant ce deuxième aspect, la présente invention permet la géolocalisation du premier terminal par lui-même sur la base des signaux échangés avec le deuxième terminal et présente les mêmes avantages que ceux indiqués plus haut.

- Dans des modes de réalisation, un procédé de géolocalisation suivant l'invention est selon l'une des revendication 3 à 5.

Suivant un troisième aspect, la présente invention propose un programme d'ordinateur selon la revendication 6.

Suivant un quatrième aspect, la présente invention propose un dispositif de géolocalisation selon la revendication 7.

Suivant un cinquième aspect, la présente invention propose un dispositif de géolocalisation selon la revendication 8.

Dans des modes de réalisation, un dispositif de géolocalisation selon l'invention est selon la revendication 9.

Ces caractéristiques et avantages de l'invention apparaîtront à la lecture de la description qui va suivre, donnée uniquement à titre d'exemple, et faite en référence aux dessins annexés, sur lesquels :

[Fig 1] la figure 1 représente une vue schématique d'un système de télécommunication satellite dans un mode de réalisation de l'invention ;

[Fig 2] la figure 2 est une illustration des variations sur les paramètres radiofréquence de la liaison satellite dues au déplacement du satellite ;

[Fig 3] la figure 3 est une illustration d'une configuration du réseau de télécommunication et des variations sur les paramètres radiofréquences correspondantes ;

[Fig 4] la figure 4 est un organigramme d'étapes mises en oeuvre dans un mode de réalisation de l'invention ;

[Fig 5] la figure 5 illustre un mode de réalisation particulier de l'invention à l'aide d'un maillage où chaque point du maillage est associé à un modèle préfini de variation de ΔF et/ou de TT en fonction du temps ;

[Fig 6] la figure 6 illustre un mode de réalisation particulier de l'invention à l'aide d'une approche polynomiale.

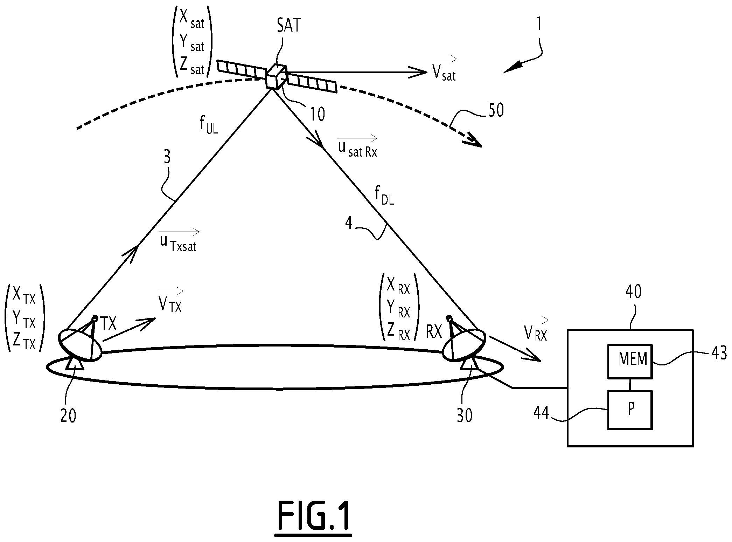

La figure 1 représente un système 1 de télécommunication par satellite défilant dans un mode de mise en oeuvre de l'invention, comportant un satellite défilant 10 et deux terminaux 20, 30 de télécommunication par ce satellite. Chacun de ces terminaux est doté des moyens techniques pour mettre en oeuvre une telle télécommunication par satellite (par exemple d'une antenne radiosatellite, d'un bloc d'amplification et de changement de fréquence et d'un modem) ; ces moyens sont connus et ne sont pas détaillés ici.

Le satellite 10 est de type transparent.

Le terminal 30, nommé terminal Rx 30, est doté d'un dispositif de géolocalisation 40 adapté pour analyser les signaux reçus par le terminal 30 en provenance du terminal 20, nommé terminal Tx 20, et pour déterminer une géolocalisation du terminal Tx 20 dans un premier mode de réalisation, en fonction de cette analyse. Les signaux sont émis par le terminal Tx 20 sur la liaison montante 3 jusqu'au satellite 10, puis émis sur la liaison descendante 4 vers le terminal Rx 30.

Par exemple, le terminal 30 dans ce premier mode de réalisation est une station d'ancrage, en relation avec plusieurs terminaux utilisateurs. Il connaît sa position et celle du satellite (il doit pointer vers celui-ci).

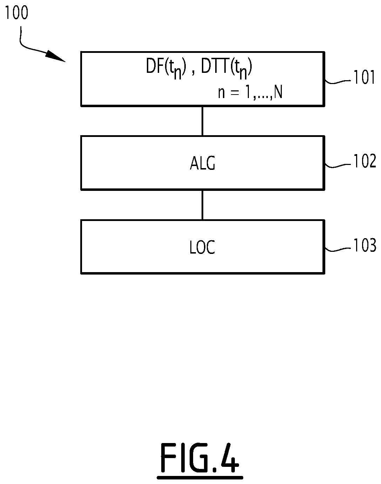

Dans un mode de réalisation, le dispositif de géolocalisation 40 comprend une mémoire 43 et un processeur 44. La mémoire 43 comprend des instructions logicielles, qui lorsqu'elles sont exécutées sur le processeur 44, mettent en oeuvre automatiquement les étapes incombant au dispositif de géolocalisation 40 décrites en référence à la figure 4.

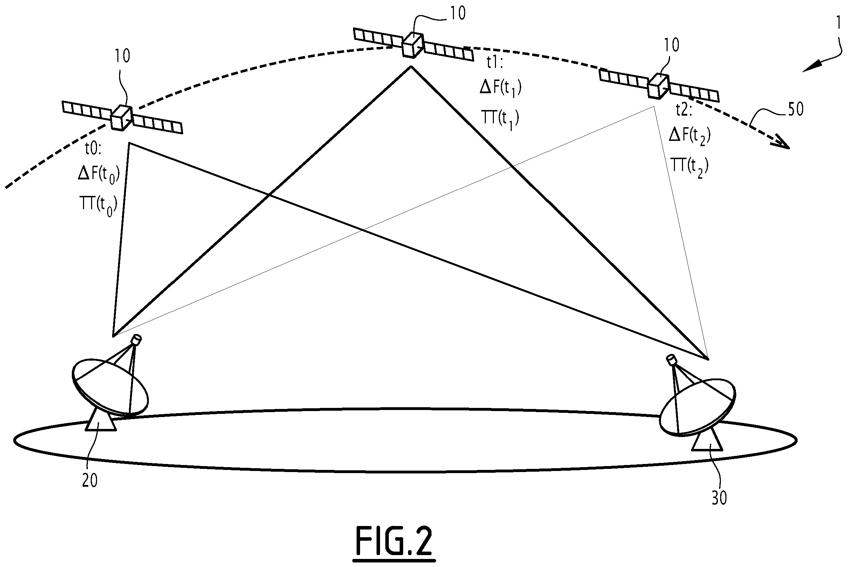

En défilant, le satellite 10 crée des variations temporelles de décalage Doppler et de temps de transit, comme représenté en figure 2 en considérant la position du satellite à trois instants successifs t0, t1, t2, ainsi que les valeurs correspondantes de décalage Doppler ΔF(t0), ΔF(t1), ΔF(t2) et de temps de transit TT(t0), TT(t1), TT(t2).

Comme il est connu, le décalage Doppler est le décalage de fréquence d'une onde observé lorsque la distance entre l'émetteur et le récepteur varie au cours du temps et le temps de transit est le temps de propagation de l'onde sur le lien montant 3 et sur le lien descendant 4.

L'évolution de Doppler et l'évolution du temps de transit dépendent de la position du terminal Tx 20 à localiser, de la position connue du terminal Rx 30, de la position connue du satellite 10, de la fréquence, connue, $f_{UL}$ de la liaison montante 3 de la fréquence $f_{DL}$, connue, de la liaison descendante 4.

Le doppler ΔF(t) vérifie la formule suivante (formule 1) à l'instant t :

$$\Delta F(t) = \Delta F_{UL}(t) + \Delta F_{DL}(t) = \frac{\langle \overrightarrow{V_{TX}(t)} - \overrightarrow{V_{sat}(t)} | \overrightarrow{u_{TxSat}(t)} \rangle * f_{UL}(t)}{c} + \frac{\langle \overrightarrow{V_{Sat}(t)} - \overrightarrow{V_{RX}(t)} | \overrightarrow{u_{SatRx}(t)} \rangle * f_{DL}(t)}{c}$$

avec

$\Delta F_{UL}(t)$ : décalage Doppler de la liaison montante à l'instant t ;

$\Delta F_{DL}(t)$ : décalage Doppler de la liaison descendante à l'instant t ;

$\langle ... | ... \rangle$ : produit scalaire euclidien ;

c : célérité de la lumière dans le vide

$\overrightarrow{V_{rx}(t)}$ : le vecteur vitesse du premier terminal que l'on cherche à localiser à l'instant t, considéré au premier ordre comme égal à la vitesse correspondant à la rotation de la terre ;

$\overrightarrow{V_{sat}(t)}$ : vecteur vitesse connue du satellite à l'instant t ;

$\overrightarrow{u_{TxSat}(t)}$ : vecteur directeur unitaire, inconnu, entre le premier terminal et le satellite à l'instant t ;

$f_{UL}(t)$ : fréquence, connue, de la liaison montante à l'instant t;

$\overrightarrow{V_{RX}(t)}$ : vecteur vitesse, connu, du deuxième terminal à l'instant t ;

$\overrightarrow{u_{SatRx}(t)}$ : vecteur directeur unitaire, connu, entre le satellite et le deuxième terminal à l'instant t ;

$f_{DL}(t)$: fréquence, connue, de la liaison descendante à l'instant t ;

Tous les vecteurs sont exprimés dans un repère orthonormé. Le repère orthonormé peut être fixe ou inertiel par rapport à la terre.

Le vecteur $\overrightarrow{V_{RX}}$ peut être décomposé selon la somme $\overrightarrow{V_{RX}} = \overrightarrow{V_{terre}} + \overrightarrow{V_{mouvX}}$ :

$\overrightarrow{V_{terre}}$ est le vecteur vitesse du terminal Rx 30 à la rotation de la terre.

$\overrightarrow{V_{mouvX}}$ est le vecteur vitesse dû au déplacement du terminal Rx 30 sur la terre.

Dans le mode de réalisation ici considéré, $\overrightarrow{V_{mouvX}}$ qui, en pratique, est faible devant $\overrightarrow{V_{terre}}$ dans le cas de constellations défilantes, est ici négligée : à l'équateur, la composante du vecteur vitesse due la rotation de la terre est de 465 m/s, soit 1675 km/h. Par ailleurs, l'estimation est suffisamment rapide pour négliger ce terme.

Similairement, le vecteur vitesse du terminal Tx 20 peut être assimilé à celui de rotation de la terre. A noter qu'on pourrait aussi considérer que le vecteur vitesse d'un terminal est égal à la somme de ce vecteur de rotation et d'une vitesse déterminée, par exemple un vecteur constant, représentant le déplacement du terminal par rapport à la terre De manière encore plus générale, on pourrait également trouver le vecteur vitesse complet en l'intégrant dans la formule 1. Une méthode pour l'estimer est par exemple de renouveler l'estimation de position régulièrement. La méthode d'estimation étant rapide, elle peut négliger le terme de vitesse du porteur. En renouvelant la mesure après une période où le vecteur vitesse a fait varier significativement la position, on refait une mesure. Le vecteur vitesse est donné par la variation de position pendant cette durée. Une solution utilisant un filtre de Kalman donnera une estimation plus précise.

Lorsque seule la position du terminal à géolocaliser est inconnue, seules 2 positions pour ledit terminal mènent à une même fonction ΔF(t) conformément à la formule 1 : sa position effective et la position symétrique de celle-ci par rapport au plan défini par l'orbite du satellite. Dans le cas d'une orbite circulaire, on ne pourra ainsi déterminer si le terminal à géolocaliser est dans l'hémisphère Nord ou dans l'hémisphère Sud si cette information n'est par ailleurs pas connue.

Le temps de transit TT(t) vérifie la formule suivante (formule 2) à l'instant t :

$$TT(t) = TT_{UL}(t) + TT_{DL}(t)$$

$$TT(t) = \frac{1}{c}\left( \sqrt{(X_{Tx}(t) - X_{Sat}(t))^2 + (Y_{Tx}(t) - Y_{Sat}(t))^2 + (Z_{Tx}(t) - Z_{Sat}(t))^2} \right.$$
$$\left. + \sqrt{(X_{Rx}(t) - X_{Sat}(t))^2 + (Y_{Rx}(t) - Y_{Sat}(t))^2 + (Z_{Rx}(t) - Z_{Sat}(t))^2} \right)$$

Avec

c : célérité de la lumière dans le vide
$TT_{UL}(t)$ : temps de transit de la liaison montante ;
$TT_{DL}(t)$ : temps de transit de la liaison descendante ; ce terme est connu ;
$(X_{Sat}(t); Y_{Sat}(t); Z_{Sat}(t))$ : coordonnées sur satellite à l'instant t ; ces coordonnées sont connues ;
$(X_{Tx}(t); Y_{Tx}(t); Z_{Tx}(t))$ : coordonnées du terminal Tx 20 que l'on cherche à localiser ; ces coordonnées sont inconnues ;
$(X_{Rx}(t); Y_{Rx}(t); Z_{Rx}(t))$ : coordonnées du terminal Rx 30 ; ces coordonnées sont connues.

Toutes les coordonnées sont exprimées dans un repère orthonormé. Le repère orthonormé peut être fixe ou inertiel par rapport à la terre.

Lorsque seule la position du terminal à localiser est inconnue, seules 2 positions pour ce terminal mènent à une même fonction **TT(t)** selon la formule 2 : la position effective du terminal et sa position symétrique par rapport au plan défini par l'orbite du satellite.

La résolution des équations correspondantes peut être simplifiée en tenant compte :

- du mouvement de rotation de la terre ;
- de la trajectoire orbitale du satellite.

En référence à la figure 4, l'ensemble 100 d'étapes est mis en oeuvre par le dispositif de géolocalisation 40.
Dans une première étape 101 :

- le dispositif de géolocalisation 40 analyse $N_F$ signaux reçus à des instants t successifs par le terminal Rx 30, $N_F$ étant supérieur ou égal à 3, et détermine pour chacun des $N_F$ signaux reçus à des instants t successifs par le terminal Rx 30, et étant donné la fréquence de réception de référence prédéterminée $f_{DL}$ des signaux, la variation de fréquence ΔF(t) du signal reçu due à l'effet Doppler en calculant la différence entre la fréquence de réception dudit signal et la fréquence de réception de référence prédéterminée $f_{DL}$ : en effet , à l'instant t, le signal reçu est reçu à la fréquence $f_{DL}$ + ΔF(t) ;
et/ou
- pour chacun des $N_T$ signaux reçus à des instants t successifs par le terminal Rx 30, $N_T$ étant supérieur ou égal à 3, détermination du temps de transit TT(t) du signal en calculant la différence entre l'instant de réception dudit signal et l'instant d'émission. Cette mesure peut être réalisée par un mécanisme d'horodatage du signal émis.

Le délai entre des instants successifs de mesure est par exemple compris dans la plage 0,1ms à 10s.
Par ailleurs, dans la formule 1, seul le vecteur directeur unitaire $u_{TxSat}(t)$ est inconnu. Ce terme comporte 3 inconnues. En théorie, dès 3 mesures temporelles de la fréquence de réception, il peut donc être déterminé ; en pratique, bien sûr, il est préférable de prendre en compte plus de mesures pour affiner le résultat et diminuer l'impact des erreurs de mesures.

Les considérations sont similaires quant au temps de transit et à la formule 2.

Ainsi dans une étape 102, de manière non-revendiquée le système d'équations défini par les $N_F$ égalités entre chaque valeur successive $\Delta F(t)$ calculée à chacun des instants t successifs et par la formule (1) correspondante considérée audit instant t est résolu par la mise en oeuvre d'un algorithme de résolution du système d'équation par le dispositif de géolocalisation 40 ; et/ou

le système d'équations défini par les $N_T$ égalités entre chaque valeur successive TT(t) calculée à chacun des instants t successifs et par la formule (2) correspondante considérée audit instant t est résolu par la mise en oeuvre d'un algorithme de résolution du système d'équation par le dispositif de géolocalisation 40.

Il existe plusieurs méthodes de résolutions de ces équations, par exemple de type :

   ◦ méthode brute force ;
   ◦ méthode itérative ;
   ◦ méthode du gradient
   ◦ filtre de Kalman

Ces méthodes et leurs implémentations présentent des différences de vitesse de convergence, de précision de la mesure finale, de sensibilité à des erreurs de mesure, de complexité de calcul

La meilleure méthode de résolution dépendra donc des contraintes de mise en oeuvre.

Suivant les cas, on n'utilisera que la fréquence Doppler ou que le temps de transit pour effectuer la géolocalisation, ou encore les deux pour obtenir de meilleurs résultats en précision, vitesse de convergence, etc...

La géolocalisation du terminal Tx 20 à l'instant t est égale à celle à partir de laquelle le vecteur $\overrightarrow{uTxSat}(t)$ défini par ledit système d'équation pointe vers le satellite

Dans une étape 103, la détermination de la géolocalisation du terminal Tx 20 est achevée, en sélectionnant celle des deux positions symétriques qui peut être retenue et en combinant le cas échéant les géolocalisations distinctes déterminées via le temps de transit et le décalage Doppler.

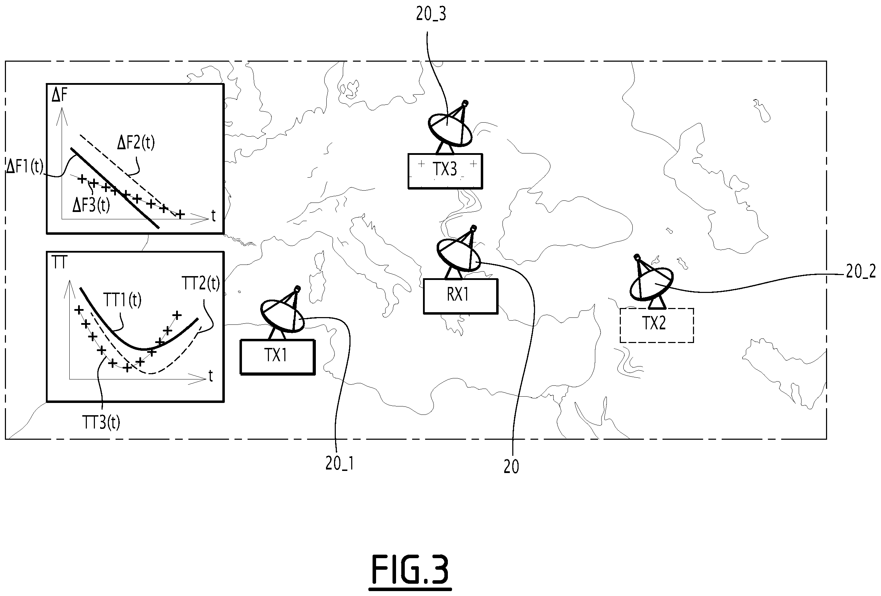

Sur la figure 3 sont représentées les évolutions temporelles de $\Delta F$ et TT générées par les constellations défilantes transparentes et dépendantes de la position du premier terminal. L'évolution de ces paramètres est unique : elle permet de localiser un terminal de télécommunication. Ainsi la droite $\Delta F1(t)$ représente la suite des valeurs $\Delta F$ calculées par le terminal RX1 suite à l'analyse du signal reçu terminal TX1 20_1, correspondant à la station d'ancrage 30 mentionné plus haut. Similairement $\Delta F2(t)$, respectivement $\Delta F3(t)$ correspondent aux signaux reçus du TX2 20_2, respectivement TX3 20_3 en leur position respective. Similairement la courbe TT1(t), respectivement TT2(t), TT3(t) représente la suite des valeurs TT calculées par le terminal RX1, correspondant à la station d'ancrage 30 mentionnée plus haut, pour le terminal TX1 20_1, respectivement TX2 20_2, TX3 20_3 en leur position respective.

La présente invention permet ainsi de déterminer la géolocalisation d'un terminal satellite dans le réseau à l'aide de signaux échangés, sur la liaison descendante, avec ce terminal, sans nécessiter de GNSS.

En outre, selon l'invention, il n'y a pas besoin de connaître une position initiale du terminal à géolocaliser pour déterminer sa position courante.

Dans un mode de réalisation MDR1 et de manière non revendiquée, au cours de l'étape 102, un traitement distinct, relatif à l'évolution des observations Doppler $\Delta F$ et/ou des observations TT(t) du temps de transit complète, ou remplace, le traitement de résolution directe du système d'équations présenté, décrit plus haut.

Ainsi dans une phase préalable :

- la zone de couverture où sont susceptibles de se trouver les terminaux à géolocaliser est maillée en longitude et latitude selon un pas donné ; pour chaque point de la grille, l'évolution temporelle du décalage Doppler est précalculée en fonction de la formule 1 et/ou l'évolution temporelle du temps de transit est précalculée en fonction de la formule 2 ; et le profil temporel théorique obtenu est associé à chaque point de la grille dans une base de données chargée en mémoire du dispositif de géolocalisation 40.

Puis, dans une phase opérationnelle, dans une étape de comparaison de profils, le dispositif de géolocalisation 40 obtient les $N_F$ observations successives relatives au Doppler et/ou les $N_T$ observations successives relatives au temps de transit de l'étape 101, ce qui définit un profil calculé conformément à l'étape 101. Le dispositif de géolocalisation 40 compare alors le profil de décalage Doppler ainsi calculé issu de l'observation aux profils temporels de décalage Doppler préalablement associés aux points de la grille et sélectionne le profil le plus proche : le dispositif de géolocalisation 40 affecte alors au terminal à géolocaliser la position du point de la grille associé au profil sélectionné.

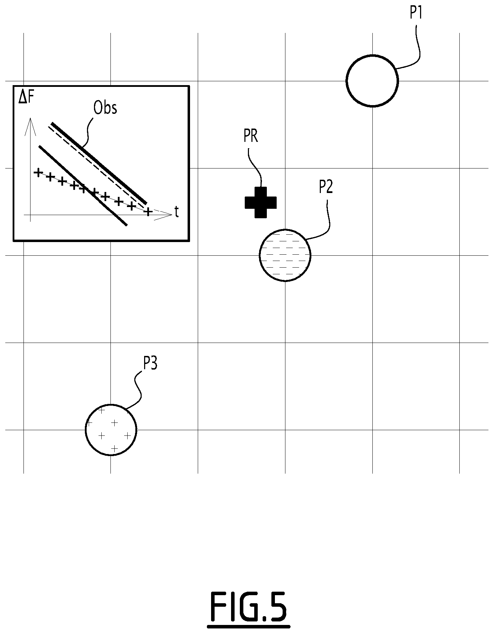

En référence à la figure 5, les profils théoriques prédéfinis $\Delta F$ dans la phase préalable et associés aux points de la grille P1, P2, P3 sont représentés en trait plein pour P1, en pointillés pour P2 et en croix pour P3 et numérotés respectivement 1, 2, 3 tandis que le profil calculé depuis l'observation des signaux reçus, nommé Obs, en fonction des mesures de l'étape 101, est représenté en gras. Le terminal à localiser se trouve en PR ; le point P2 de la grille est celui des trois points de la grille considérés ici dont le profil prédéfini associé est le plus proche du profil d'observation.

En outre, ou à la place, le dispositif de géolocalisation 40 compare alors le profil de temps de transit calculé aux profils temporels de temps de transit théoriques associés aux points de la grille et sélectionne le profil théorique le plus proche : le dispositif de géolocalisation 40 affecte alors au terminal à géolocaliser la position du point de la grille associé au profil sélectionné.

Dans le cas où et le décalage Doppler et le temps de transit sont considérés et que les points de la grille affectés sont distincts, une solution unique est déterminée par applicatif d'une règle prédéfinie (par exemple moyennage ...).

Puis l'étape de comparaison de profils est réitérée seulement dans une sous-zone réduite de couverture autour du point de géolocalisation, en considérant un maillage plus fin (par exemple 1°, puis 0,1°, puis 0,01° ...), pour affiner la géolocalisation tout en limitant les calculs.

Dans un mode de réalisation MDR2 revendiqué, au cours de l'étape 102, un traitement distinct, relatif à l'évolution des observations Doppler $\Delta F$ et/ou des observations TT(t) du temps de transit complète, ou remplace, le traitement de résolution directe du système d'équations présenté, décrit plus haut et/ou le traitement selon le mode de réalisation MDR1 décrit ci-dessus.

Selon ce dernier mode de réalisation, l'évolution de la fonction $\Delta F$ et/ou de TT est modélisée sous la forme de polynômes : du premier ordre pour le décalage Doppler et du second ordre pour le temps de transit.

Ainsi on peut approcher l'évolution du décalage Doppler sous la forme $\Delta F(t) = a * t + b$

De même, on peut approcher l'évolution du temps de transit sous la forme $TT(t) = a' * t^2 + b' * t + c'$.

Les valeurs des coefficients dépendent notamment de la position du terminal à déterminer.

Selon cette approche, le dispositif de géolocalisation 40 met en oeuvre la méthode itérative suivante :

- i/ sur une période temporelle donnée, le dispositif de géolocalisation 40 obtient $N_F$ observations successives relatives au Doppler (et/ou les $N_T$ observations successives relatives au temps de transit) de l'étape 101 et calcule les coefficients polynomiaux $a_{obs}$, $b_{obs}$ pour le décalage Doppler ($a'_{obs}$, $b'_{obs}$ ; $c'_{obs}$ pour le temps de transit) correspondant aux observations ;
- ii/ sur la même durée temporelle, une position du terminal émetteur Tx 20 est supposée et les valeurs successives théoriques de $\Delta F$ (et/ou de TT) sont calculées pour cette hypothèse de position avec la formule théorique 1 (et/ou la formule théorique 2) ; puis les coefficients polynomiaux associés $a_{hyp}$, $b_{hyp}$ ($a'_{hyp}$, $b'_{hyp}$ ; $c'_{hyp}$ pour le temps de transit) - tels que le polynôme correspondant donnent les valeurs théoriques calculés - sont calculés ;
- iii/ la valeur d'un estimateur de vraisemblance associé à cette hypothèse, $\varepsilon_{hyp}$ (et caractérisant la distance par rapport à la valeur la plus vraisemblable) est calculée (par exemple de la forme $\epsilon_{hyp} = \frac{1}{N_F} * \Sigma |f_{hyp} - f_{obs}|$) ;
- iv/ les coefficients des deux modélisations sont comparés entre eux : en fonction des signes relatifs des 2 modélisations, un déplacement selon l'axe Est/Ouest ou selon l'axe Nord/Sud est déduit ; le déplacement peut se faire selon un pas fixe ou variable ;
- v/ l'opération est réitérée à partir de i/ jusqu'à obtenir la position qui minimise le critère de vraisemblance.

Par exemple, dans le cas d'une modélisation du Doppler selon une fonction affine, l'erreur de pente a est davantage liée à une erreur de latitude :

  ◦ si $a_{hyp} - a_{obs} > 0$, l'émetteur est plus au Sud ;
  ◦ i $a_{hyp} - a_{obs} < 0$, l'émetteur est plus au Nord

Par ailleurs, l'erreur d'ordonnée à l'origine b est davantage liée à une erreur de longitude :

  ◦ si $b_{hyp} - b_{obs} > 0$, l'émetteur est plus à l'Ouest ;
  ◦ si $b_{hyp} - b_{obs} < 0$, l'émetteur est plus à l'Est.

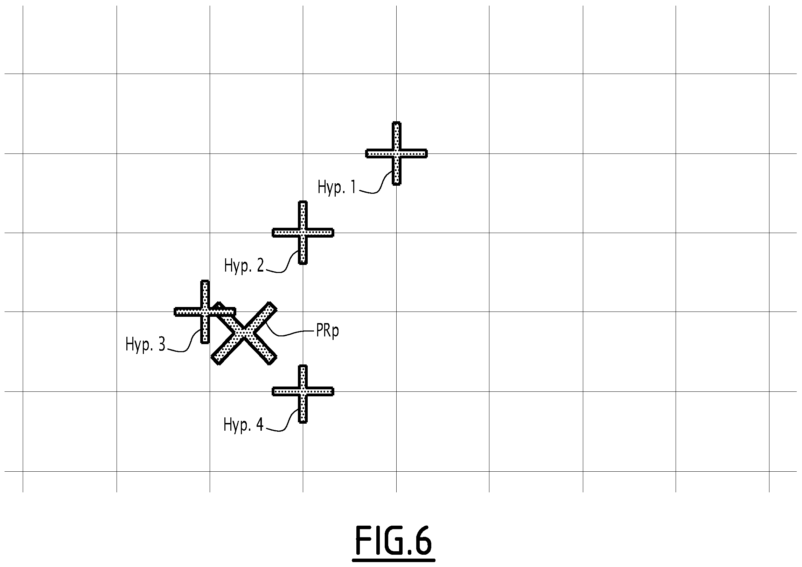

La méthode est illustrée en figure 6 (avec un pas fixe). Dans une première itération, la première position du terminal émetteur Tx 20 est prise comme correspondant à la localisation repérée par le point Hyp1 sur une carte géographique ; il est déterminé que :

$$a_{hyp,1} - a_{obs} > 0 \; ;$$

$$b_{hyp,1} - b_{obs} > 0 \; ;$$

et une valeur de critère de vraisemblance égale à $\varepsilon_{hyp,}1$.

Les déplacements correspondants sont réalisés, la deuxième position considérée devient celle indiquée par le point Hyp2 pour la deuxième itération. Pour cette position, il est alors déterminé que :

$$a_{hyp,2} - a_{obs} > 0$$

$$b_{hyp,2} - b_{obs} > 0$$

et une valeur de critère de vraisemblance égale à $e_{hyp,2} < \varepsilon_{hyp,}1$.

Les déplacements correspondants sont réalisés, la troisième position considérée devient celle indiquée par le point Hyp3 pour la troisième itération. Pour cette position, il est alors déterminé que :

$$a_{hyp,3} - a_{obs} > 0$$

$$b_{hyp,3} - b_{obs} < 0$$

et une valeur de critère de vraisemblance égale à $\varepsilon_{hyp,3} < \varepsilon_{hyp,2}$.

Les déplacements correspondants sont réalisés, la quatrième position considérée devient celle indiquée par le point Hyp4 pour la quatrième itération. Pour cette position, il est alors déterminé que :

$$a_{hyp,4} - a_{obs} < 0$$

$$b_{hyp,4} - b_{obs} > 0$$

et une valeur de critère de vraisemblance égale à $\varepsilon_{hyp,4} > \varepsilon_{hyp,3}$.

Au final l'hypothèse 3 est retenue car elle minimise le critère de vraisemblance : la position réelle estimée PRp est prise égale au point Hyp3.

A noter que l'observation considérée et les profils et polynômes mentionnés se réfèrent indifféremment au temps de transit, au décalage Doppler, ou à leurs dérivées. Similairement, la résolution directe décrite plus haut pourrait également être mise en oeuvre sur la base des dérivées d'ordre 1 ou davantage.

Dans le mode de réalisation décrit ci-dessus, le dispositif de géolocalisation 40 dans le terminal Rx 30 déterminait la position du terminal Tx 20 sur la base des signaux reçus par le terminal Rx 30 sur la liaison descendante 4 en provenance du terminal Tx 20. Dans un autre mode de réalisation, le dispositif de géolocalisation 40 dans le terminal Rx 30 est adapté pour déterminer sa propre position sur la base des signaux reçus par le terminal Rx 30 sur la liaison descendante 4 en provenance du terminal Tx 20 (qui est par exemple cette fois-ci la station d'ancrage) : alors le terminal Rx 30 connaît la position du terminal Tx 20 et celle du satellite ; cette fois, l'inconnue dans la formule 1 est $\overline{u_{SatRx}(t)}$. Similairement, dans la formule 2, les inconnues sont cette fois ($X_{Rx}$; $Y_{Rx}$; $Z_{Rx}$), coordonnées du terminal Rx 30.

On notera que dans un mode de réalisation, le dispositif de géolocalisation 40 peut être distant du terminal Rx 30, tout en opérant sur les signaux reçus par ce dernier.

Dans un autre mode de réalisation, le dispositif de géolocalisation 40 est réalisé sous forme d'un composant logique programmable, tel qu'un FPGA (de l'anglais *Field Programmable Gate Array),* ou encore sous forme d'un circuit intégré dédié, tel qu'un ASIC (de l'anglais *Applications Spécifie Integrated Circuit*) ou un DSP (Digital Signal Processor) ou GPU (Graphies Processing Unit).

Le doppler ΔF(t) vérifie la formule suivante (formule 1) à l'instant t :

$$\Delta F(t) = \Delta F_{UL}(t) + \Delta F_{DL}(t) = \frac{\langle \overrightarrow{V_{TX}(t)} - \overrightarrow{V_{sat}(t)} | \overrightarrow{u_{TxSat}(t)} \rangle * f_{UL}(t)}{c} + \frac{\langle \overrightarrow{V_{Sat}(t)} - \overrightarrow{V_{RX}(t)} | \overrightarrow{u_{SatRx}(t)} \rangle * f_{DL}(t)}{c}$$

avec

$\Delta F_{UL}(t)$ : décalage Doppler de la liaison montante à l'instant t ;

$\Delta F_{DL}(t)$ : décalage Doppler de la liaison descendante à l'instant t ;

$\langle ... | ...\rangle$ : produit scalaire euclidien ;

c : célérité de la lumière dans le vide

$\overline{V_{TX}(t)}$ : le vecteur vitesse du premier terminal que l'on cherche à localiser à l'instant t, considéré au premier ordre comme égal à la vitesse correspondant à la rotation de la terre ;

$\overline{V_{sat}(t)}$ : vecteur vitesse connue du satellite à l'instant t ;

$\overline{u_{TxSat}(t)}$ : vecteur directeur unitaire, inconnu, entre le premier terminal et le satellite à l'instant t ;

$f_{UL}(t)$ : fréquence, connue, de la liaison montante à l'instant t;

$\overline{V_{RX}(t)}$ : vecteur vitesse, connu, du deuxième terminal à l'instant t ;

$\overline{u_{SatRx}(t)}$: vecteur directeur unitaire, connu, entre le satellite et le deuxième terminal à l'instant t ;

$f_{DL}(t)$: fréquence, connue, de la liaison descendante à l'instant t ;

Tous les vecteurs sont exprimés dans un repère orthonormé. Le repère orthonormé peut être fixe ou inertiel par rapport à la terre.

Le vecteur $\overline{V_{RX}}$ peut être décomposé selon la somme $\overline{V_{RX}} = \overline{V_{terre}} + \overline{V_{mouvX}}$. :
$\overline{V_{terre}}$ est le vecteur vitesse du terminal Rx 30 à la rotation de la terre.

$\overline{V_{mouvx}}$ est le vecteur vitesse dû au déplacement du terminal Rx 30 sur la terre.

Dans le mode de réalisation ici considéré, $\overline{V_{mouvX}}$ qui, en pratique, est faible devant $\overline{V_{terre}}$ dans le cas de constellations défilantes, est ici négligée : à l'équateur, la composante du vecteur vitesse due la rotation de la terre est de 465 m/s, soit 1675 km/h. Par ailleurs, l'estimation est suffisamment rapide pour négliger ce terme.

Similairement, le vecteur vitesse du terminal Tx 20 peut être assimilé à celui de rotation de la terre.A noter qu'on pourrait aussi considérer que le vecteur vitesse d'un terminal est égal à la somme de ce vecteur de rotation et d'une vitesse déterminée, par exemple un vecteur constant, représentant le déplacement du terminal par rapport à la terre De manière encore plus générale, on pourrait également trouver le vecteur vitesse complet en l'intégrant dans la formule 1. Une méthode pour l'estimer est par exemple de renouveler l'estimation de position régulièrement. La méthode d'estimation étant rapide, elle peut négliger le terme de vitesse du porteur. En renouvelant la mesure après une période où le vecteur vitesse a fait varier significativement la position, on refait une mesure. Le vecteur vitesse est donné par la variation de position pendant cette durée. Une solution utilisant un filtre de Kalman donnera une estimation plus précise.

Lorsque seule la position du terminal à géolocaliser est inconnue, seules 2 positions pour ledit terminal mènent à une même fonction $\Delta F(t)$ conformément à la formule 1 : sa position effective et la position symétrique de celle-ci par rapport au plan défini par l'orbite du satellite. Dans le cas d'une orbite circulaire, on ne pourra ainsi déterminer si le terminal à géolocaliser est dans l'hémisphère Nord ou dans l'hémisphère Sud si cette information n'est par ailleurs pas connue.

Le temps de transit TT(t) vérifie la formule suivante (formule 2) à l'instant t :

$$TT(t) = TT_{UL}(t) + TT_{DL}(t)$$

$$TT(t) = \frac{1}{c}\left(\sqrt{(X_{Tx}(t) - X_{Sat}(t))^2 + (Y_{Tx}(t) - Y_{Sat}(t))^2 + (Z_{Tx}(t) - Z_{Sat}(t))^2}\right.$$
$$\left. + \sqrt{(X_{Rx}(t) - X_{Sat}(t))^2 + (Y_{Rx}(t) - Y_{Sat}(t))^2 + (Z_{Rx}(t) - Z_{Sat}(t))^2}\right)$$

Avec

c : célérité de la lumière dans le vide

$TT_{UL}(t)$ : temps de transit de la liaison montante ;

$TT_{DL}(t)$ : temps de transit de la liaison descendante ; ce terme est connu ;

$(X_{Sat}(t); Y_{Sat}(t); Z_{Sat}(t))$ : coordonnées sur satellite à l'instant t ; ces coordonnées sont connues ;

$(X_{Tx}(t); Y_{Tx}(t); Z_{Tx}(t))$ : coordonnées du terminal Tx 20 que l'on cherche à localiser ; ces coordonnées sont inconnues ;

$(X_{Rx}(t); Y_{Rx}(t); Z_{Rx}(t))$ : coordonnées du terminal Rx 30 ; ces coordonnées sont connues.

Toutes les coordonnées sont exprimées dans un repère orthonormé. Le repère orthonormé peut être fixe ou inertiel par rapport à la terre.

Lorsque seule la position du terminal à localiser est inconnue, seules 2 positions pour ce terminal mènent à une même fonction $TT(t)$ selon la formule 2 : la position effective du terminal et sa position symétrique par rapport au plan défini par l'orbite du satellite.

La résolution des équations correspondantes peut être simplifiée en tenant compte :

- du mouvement de rotation de la terre ;
- de la trajectoire orbitale du satellite.

En référence à la figure 4, l'ensemble 100 d'étapes est mis en oeuvre par le dispositif de géolocalisation 40.

Dans une première étape 101 :

- le dispositif de géolocalisation 40 analyse $N_F$ signaux reçus à des instants t successifs par le terminal Rx 30, $N_F$ étant supérieur ou égal à 3, et détermine pour chacun des $N_F$ signaux reçus à des instants t successifs par le terminal Rx 30, et étant donné la fréquence de réception de référence prédéterminée $f_{DL}$ des signaux, la variation de fréquence $\Delta F(t)$ du signal reçu due à l'effet Doppler en calculant la différence entre la fréquence de réception dudit signal et la fréquence de réception de référence prédéterminée $f_{DL}$ : en effet , à l'instant t, le signal reçu est reçu à la fréquence $f_{DL}$ + $\Delta F(t)$ ;
  et/ou
- pour chacun des $N_T$ signaux reçus à des instants t successifs par le terminal Rx 30, $N_T$ étant supérieur ou égal à 3, détermination du temps de transit TT(t) du signal en calculant la différence entre l'instant de réception dudit signal et l'instant d'émission. Cette mesure peut être réalisée par un mécanisme d'horodatage du signal émis.

Le délai entre des instants successifs de mesure est par exemple compris dans la plage 0,1ms à 10s.

Par ailleurs, dans la formule 1, seul le vecteur directeur unitaire $\overline{u_{TxSat}(t)}$ est inconnu. Ce terme comporte 3 inconnues. En théorie, dès 3 mesures temporelles de la fréquence de réception, il peut donc être déterminé ; en pratique, bien sûr, il est préférable de prendre en compte plus de mesures pour affiner le résultat et diminuer l'impact des erreurs de mesures.

Les considérations sont similaires quant au temps de transit et à la formule 2.

Ainsi dans une étape 102, le système d'équations défini par les $N_F$ égalités entre chaque valeur successive $\Delta F(t)$ calculée à chacun des instants t successifs et par la formule (1) correspondante considérée audit instant t est résolu par la mise en oeuvre d'un algorithme de résolution du système d'équation par le dispositif de géolocalisation 40 ; et/ou le système d'équations défini par les $N_T$ égalités entre chaque valeur successive TT(t) calculée à chacun des instants t successifs et par la formule (2) correspondante considérée audit instant t est résolu par la mise en oeuvre d'un algorithme de résolution du système d'équation par le dispositif de géolocalisation 40.

Il existe plusieurs méthodes de résolutions de ces équations, par exemple de type :

  ◦ méthode brute force ;
  ◦ méthode itérative ;
  ◦ méthode du gradient
  ◦ filtre de Kalman

Ces méthodes et leurs implémentations présentent des différences de vitesse de convergence, de précision de la mesure finale, de sensibilité à des erreurs de mesure, de complexité de calcul

La meilleure méthode de résolution dépendra donc des contraintes de mise en oeuvre.

Suivant les cas, on n'utilisera que la fréquence Doppler ou que le temps de transit pour effectuer la géolocalisation, ou encore les deux pour obtenir de meilleurs résultats en précision, vitesse de convergence, etc...

La géolocalisation du terminal Tx 20 à l'instant t est égale à celle à partir de laquelle le vecteur $\overline{u_{TxSat}(t)}$ défini par ledit système d'équation pointe vers le satellite

Dans une étape 103, la détermination de la géolocalisation du terminal Tx 20 est achevée, en sélectionnant celle des deux positions symétriques qui peut être retenue et en combinant le cas échéant les géolocalisations distinctes déterminées via le temps de transit et le décalage Doppler.

Sur la figure 3 sont représentées les évolutions temporelles de $\Delta F$ et TT générées par les constellations défilantes transparentes et dépendantes de la position du premier terminal. L'évolution de ces paramètres est unique : elle permet de localiser un terminal de télécommunication. Ainsi la droite $\Delta F1(t)$ représente la suite des valeurs $\Delta F$ calculées par le terminal RX1 suite à l'analyse du signal reçu terminal TX1 20_1, correspondant à la station d'ancrage 30 mentionné plus haut. Similairement $\Delta F2(t)$, respectivement $\Delta F3(t)$ correspondent aux signaux reçus du TX2 20_2, respectivement TX3 20_3 en leur position respective. Similairement la courbe TT1(t), respectivement TT2(t), TT3(t) représente la suite des valeurs TT calculées par le terminal RX1, correspondant à la station d'ancrage 30 mentionnée plus haut, pour le terminal TX1 20_1, respectivement TX2 20_2, TX3 20_3 en leur position respective.

La présente invention permet ainsi de déterminer la géolocalisation d'un terminal satellite dans le réseau à l'aide de signaux échangés, sur la liaison descendante, avec ce terminal, sans nécessiter de GNSS.

En outre, selon l'invention, il n'y a pas besoin de connaître une position initiale du terminal à géolocaliser pour déterminer sa position courante.

Dans un mode de réalisation MDR1, au cours de l'étape 102, un traitement distinct, relatif à l'évolution des observations Doppler ΔF et/ou des observations TT(t) du temps de transit complète, ou remplace, le traitement de résolution directe du système d'équations présenté, décrit plus haut.

Ainsi dans une phase préalable :

- la zone de couverture où sont susceptibles de se trouver les terminaux à géolocaliser est maillée en longitude et latitude selon un pas donné ; pour chaque point de la grille, l'évolution temporelle du décalage Doppler est précalculée en fonction de la formule 1 et/ou l'évolution temporelle du temps de transit est précalculée en fonction de la formule 2 ; et le profil temporel théorique obtenu est associé à chaque point de la grille dans une base de données chargée en mémoire du dispositif de géolocalisation 40.

Puis, dans une phase opérationnelle, dans une étape de comparaison de profils, le dispositif de géolocalisation 40 obtient les $N_F$ observations successives relatives au Doppler et/ou les $N_T$ observations successives relatives au temps de transit de l'étape 101, ce qui définit un profil calculé conformément à l'étape 101. Le dispositif de géolocalisation 40 compare alors le profil de décalage Doppler ainsi calculé issu de l'observation aux profils temporels de décalage Doppler préalablement associés aux points de la grille et sélectionne le profil le plus proche : le dispositif de géolocalisation 40 affecte alors au terminal à géolocaliser la position du point de la grille associé au profil sélectionné.

En référence à la figure 5, les profils théoriques prédéfinis ΔF dans la phase préalable et associés aux points de la grille P1, P2, P3 sont représentés en trait plein pour P1, en pointillés pour P2 et en croix pour P3 et numérotés respectivement 1, 2, 3 tandis que le profil calculé depuis l'observation des signaux reçus, nommé Obs, en fonction des mesures de l'étape 101, est représenté en gras. Le terminal à localiser se trouve en PR ; le point P2 de la grille est celui des trois points de la grille considérés ici dont le profil prédéfini associé est le plus proche du profil d'observation.

En outre, ou à la place, le dispositif de géolocalisation 40 compare alors le profil de temps de transit calculé aux profils temporels de temps de transit théoriques associés aux points de la grille et sélectionne le profil théorique le plus proche : le dispositif de géolocalisation 40 affecte alors au terminal à géolocaliser la position du point de la grille associé au profil sélectionné.

Dans le cas où et le décalage Doppler et le temps de transit sont considérés et que les points de la grille affectés sont distincts, une solution unique est déterminée par applicatif d'une règle prédéfinie (par exemple moyennage ...).

Puis l'étape de comparaison de profils est réitérée seulement dans une sous-zone réduite de couverture autour du point de géolocalisation, en considérant un maillage plus fin (par exemple 1°, puis 0,1°, puis 0,01° ...), pour affiner la géolocalisation tout en limitant les calculs.

Dans un mode de réalisation MDR2, au cours de l'étape 102, un traitement distinct, relatif à l'évolution des observations Doppler ΔF et/ou des observations TT(t) du temps de transit complète, ou remplace, le traitement de résolution directe du système d'équations présenté, décrit plus haut et/ou le traitement selon le mode de réalisation MDR1 décrit ci-dessus.

Selon ce dernier mode de réalisation, l'évolution de la fonction ΔF et/ou de TT est modélisée sous la forme de polynômes : du premier ordre pour le décalage Doppler et du second ordre pour le temps de transit.

Ainsi on peut approcher l'évolution du décalage Doppler sous la forme $\Delta F(t) = a * t + b$

De même, on peut approcher l'évolution du temps de transit sous la forme $TT(t) = a' * t^2 + b' * t + c'$.

Les valeurs des coefficients dépendent notamment de la position du terminal à déterminer.

Selon cette approche, le dispositif de géolocalisation 40 met en oeuvre la méthode itérative suivante :

- i/ sur une période temporelle donnée, le dispositif de géolocalisation 40 obtient $N_F$ observations successives relatives au Doppler (et/ou les $N_T$ observations successives relatives au temps de transit) de l'étape 101 et calcule les coefficients polynomiaux $a_{obs}$ , $b_{obs}$ pour le décalage Doppler ($a'_{obs}$ , $b'_{obs}$ ; $c'_{obs}$, pour le temps de transit) correspondant aux observations ;

- ii/ sur la même durée temporelle, une position du terminal émetteur Tx 20 est supposée et les valeurs successives théoriques de ΔF (et/ou de TT) sont calculées pour cette hypothèse de position avec la formule théorique 1 (et/ou la formule théorique 2) ; puis les coefficients polynomiaux associés $a_{hyp}$ , $b_{hyp}$ ($a'_{hyp}$ , $b'_{hyp}$ ; $c'_{hyp}$ pour le temps de transit) - tels que le polynôme correspondant donnent les valeurs théoriques calculées - sont calculés ;

- iii/ la valeur d'un estimateur de vraisemblance associé à cette hypothèse, $\varepsilon_{hyp}$ (et caractérisant la distance par rapport à la valeur la plus vraisemblable) est calculée (par exemple de la forme $\epsilon_{hyp} = \frac{1}{N_F} * \Sigma |f_{hyp} - f_{obs}|$ ) ;

- iv/ les coefficients des deux modélisations sont comparés entre eux : en fonction des signes relatifs des 2 modélisations, un déplacement selon l'axe Est/Ouest ou selon l'axe Nord/Sud est déduit ; le déplacement peut se faire selon un pas fixe ou variable ;

- v/ l'opération est réitérée à partir de i/ jusqu'à obtenir la position qui minimise le critère de vraisemblance.

Par exemple, dans le cas d'une modélisation du Doppler selon une fonction affine, l'erreur de pente a est davantage liée à une erreur de latitude :

- si $a_{hyp}$ - $a_{obs}$ > 0, l'émetteur est plus au Sud ;
- i $a_{hyp}$ - $a_{obs}$ < 0, l'émetteur est plus au Nord

Par ailleurs, l'erreur d'ordonnée à l'origine b est davantage liée à une erreur de longitude :

- si $b_{hyp}$ - $b_{obs}$ > 0, l'émetteur est plus à l'Ouest ;
- si $b_{hyp}$ - $b_{obs}$ < 0, l'émetteur est plus à l'Est.

La méthode est illustrée en figure 6 (avec un pas fixe). Dans une première itération, la première position du terminal émetteur Tx 20 est prise comme correspondant à la localisation repérée par le point Hyp1 sur une carte géographique ; il est déterminé que :

$$a_{hyp,1} - a_{obs} > 0 \; ;$$

$$b_{hyp,1} - b_{obs} > 0 \; ;$$

et une valeur de critère de vraisemblance égale à $\varepsilon_{hyp,1}$.

Les déplacements correspondants sont réalisés, la deuxième position considérée devient celle indiquée par le point Hyp2 pour la deuxième itération. Pour cette position, il est alors déterminé que :

$$a_{hyp,2} - a_{obs} > 0$$

$$b_{hyp,2} - b_{obs} > 0$$

et une valeur de critère de vraisemblance égale à $\varepsilon_{hyp,2} < \varepsilon_{hyp,1}$.

Les déplacements correspondants sont réalisés, la troisième position considérée devient celle indiquée par le point Hyp3 pour la troisième itération. Pour cette position, il est alors déterminé que :

$$a_{hyp,3} - a_{obs} > 0$$

$$b_{hyp,3} - b_{obs} < 0$$

et une valeur de critère de vraisemblance égale à $\varepsilon_{hyp,3} < \varepsilon_{hyp,2}$.

Les déplacements correspondants sont réalisés, la quatrième position considérée devient celle indiquée par le point Hyp4 pour la quatrième itération. Pour cette position, il est alors déterminé que :

$$a_{hyp,4} - a_{obs} < 0$$

$$b_{hyp,4} - b_{obs} > 0$$

et une valeur de critère de vraisemblance égale à $\varepsilon_{hyp,4} > \varepsilon_{hyp,3}$.

Au final l'hypothèse 3 est retenue car elle minimise le critère de vraisemblance : la position réelle estimée PRp est prise égale au point Hyp3.

A noter que l'observation considérée et les profils et polynômes mentionnés se réfèrent indifféremment au temps de transit, au décalage Doppler, ou à leurs dérivées. Similairement, la résolution directe décrite plus haut pourrait également être mise en oeuvre sur la base des dérivées d'ordre 1 ou davantage.

Dans le mode de réalisation décrit ci-dessus, le dispositif de géolocalisation 40 dans le terminal Rx 30 déterminait la position du terminal Tx 20 sur la base des signaux reçus par le terminal Rx 30 sur la liaison descendante 4 en provenance du terminal Tx 20. Dans un autre mode de réalisation, le dispositif de géolocalisation 40 dans le terminal Rx 30 est adapté pour déterminer sa propre position sur la base des signaux reçus par le terminal Rx 30 sur la liaison descendante 4 en provenance du terminal Tx 20 (qui est par exemple cette fois-ci la station d'ancrage) : alors le terminal Rx 30 connaît la position du terminal Tx 20 et celle du satellite ; cette fois, l'inconnue dans la formule 1 est $\overline{u_{SatRx}(t)}$. Similairement, dans la formule 2, les inconnues sont cette fois ($X_{Rx}$; $Y_{Rx}$; $Z_{Rx}$), coordonnées du terminal Rx 30.

On notera que dans un mode de réalisation, le dispositif de géolocalisation 40 peut être distant du terminal Rx 30, tout en opérant sur les signaux reçus par ce dernier.

Dans un autre mode de réalisation, le dispositif de géolocalisation 40 est réalisé sous forme d'un composant logique programmable, tel qu'un FPGA (de l'anglais *Field Programmable Gate Array*), ou encore sous forme d'un circuit intégré dédié, tel qu'un ASIC (de l'anglais *Applications Spécifie Integrated Circuit*) ou un DSP (Digital Signal Processor) ou GPU (Graphies Processing Unit).

## Revendications

1. Procédé de géolocalisation d'un premier terminal de télécommunication satellite (20) en fonction de signaux échangés par ledit premier terminal de télécommunication (20), sur une liaison de télécommunication satellite (3, 4) via un satellite défilant transparent (10), avec un deuxième terminal de télécommunication satellite (30) dont la localisation est connue ; ledit procédé étant **caractérisé en ce qu'**il comprend au moins un ensemble d'étapes parmi les premier et deuxième ensembles d'étapes suivants mises en oeuvre dans un module électronique de calcul de géolocalisation (40),

   tel que selon le premier ensemble d'étapes :

   - pour chacun de N des signaux reçus à des instants t successifs par le deuxième terminal (30) et étant donné la fréquence de réception de référence prédéterminée ($f_{DL}$) des signaux, N étant supérieur ou égal à 3, détermination (101) de la variation de fréquence $\Delta F(t)$ du signal reçu due à l'effet Doppler en calculant la différence entre la fréquence de réception dudit signal et fréquence de réception de référence prédéterminée ;
   - considérant chaque valeur successive $\Delta F(t)$ déterminée à chacun des N instants t successifs et considérant qu'en outre $\Delta F(t)$ vérifie la formule théorique suivante considérée à chacun desdits instants t :

$$\Delta F(t) = \frac{\left(\overrightarrow{V_{TX}(t)} - \overrightarrow{V_{sat}(t)} \mid \overrightarrow{u_{TxSat}(t)}\right) * f_{UL}(t)}{c} + \frac{\left(\overrightarrow{V_{sat}(t)} - \overrightarrow{V_{RX}(t)} \mid \overrightarrow{u_{SatRx}(t)}\right) * f_{DL}(t)}{c}$$

   avec :

   (... | ...) : produit scalaire euclidien ;
   $\overline{V_{TX}(t)}$ : le vecteur vitesse du premier terminal (20) que l'on cherche à localiser à l'instant t, considéré comme connu ;
   $\overline{V_{sat}(t)}$ : vecteur vitesse connue du satellite à l'instant t ;
   $\overline{u_{TxSat}(t)}$ : vecteur directeur unitaire, inconnu, entre le premier terminal (20) et le satellite à l'instant t ;
   $f_{UL}(\boldsymbol{t})$ : fréquence, connue, de la liaison montante à l'instant t ;
   c : célérité de la lumière dans le vide ;
   $\overline{V_{RX}(t)}$ : vecteur vitesse, considéré comme connu, du deuxième terminal (30) à l'instant t ;
   $\overline{u_{SatRx}(t)}$ : vecteur directeur unitaire, connu, entre le satellite et le deuxième terminal (30) à l'instant t ;
   $f_{DL}(t)$ : fréquence, connue, de la liaison descendante à l'instant t ;
   déterminer (103) la géolocalisation du premier terminal (20) à au moins un desdits instants t, correspondant à celle à partir de laquelle le vecteur $\overline{u_{TxSat}(t)}$ pointe vers le satellite ;
   et tel que selon le deuxième ensemble d'étapes :

   - pour chacun de N des signaux reçus à des instants t successifs par le deuxième terminal (30), N étant supérieur ou égal à 3, détermination (101) du temps de transit TT(t) du signal en calculant la différence entre l'instant de réception dudit signal et l'instant d'émission ;
   - considérant chaque valeur successive TT(t) déterminée à chacun des N instants t successifs et considérant qu'en outre TT(t) vérifie la formule théorique suivante considérée à chacun desdits instant t :

$$TT(t) = \frac{1}{c} \left( \sqrt{(X_{Tx}(t) - X_{Sat}(t))^2 + (Y_{Tx}(t) - Y_{Sat}(t))^2 + (Z_{Tx}(t) - Z_{Sat}(t))^2} \right.$$
$$\left. + \sqrt{(X_{Rx}(t) - X_{Sat}(t))^2 + (Y_{Rx}(t) - Y_{Sat}(t))^2 + (Z_{Rx}(t) - Z_{Sat}(t))^2} \right)$$

avec :

$(X_{Sat}(t); Y_{Sat}(t); Z_{Sat}(t))$ : les coordonnées, connues, du satellite à l'instant t ;
$(X_{Tx}(t); Y_{Tx}(t); Z_{Tx}(t))$ : les coordonnées, inconnues, du premier terminal (20) à l'instant t ;
$(X_{Rx}(t); Y_{Rx}(t); Z_{Rx}(t))$ : les coordonnées, connues, du deuxième terminal (30) à l'instant t.

déterminer (103) la géolocalisation du premier terminal (20) à au moins un desdits instants t comme étant égale à $(X_{Tx}(t); Y_{Tx}(t); Z_{Tx}(t))$,
**caractérisé en ce que** le module électronique de calcul de géolocalisation (40) met en oeuvre itérativement les étapes suivantes sur une fenêtre temporelle déterminée:

i/ considérant chaque première valeur successive ΔF(t) déterminée, respectivement chaque valeur successive TT(t) déterminée pendant la fenêtre, déterminer les premiers coefficients polynomiaux d'un polynôme du premier ordre, respectivement d'un polynôme du second ordre, donnant lesdites valeurs successives ;
ii/ sur ladite fenêtre, et pour une première hypothèse de géolocalisation dudit terminal à localiser, calculer les valeurs théoriques ΔF(t), TT(t) à l'aide de la formule théorique correspondante et déterminer les deuxièmes coefficients polynomiaux d'un polynôme du premier ordre, respectivement d'un polynôme du second ordre, donnant lesdites valeurs calculées ;
iii/ calculer la valeur d'un estimateur de vraisemblance pour cette première hypothèse de géolocalisation ; comparer entre eux les premiers et les deuxièmes coefficients et déterminer un déplacement à partir de la première hypothèse de géolocalisation en fonction de ladite comparaison ;
iv/ réitérer les étapes précédentes avec la nouvelle hypothèse de géolocalisation ainsi déterminée suite audit déplacement ;
v/ choisir la géolocalisation correspondant à un minimum de l'estimateur de vraisemblance.

2. Procédé de géolocalisation d'un premier terminal de télécommunication (20) en fonction de signaux échangés par ledit premier terminal de télécommunication (20), sur une liaison de télécommunication satellite via un satellite défilant transparent (10), avec un deuxième terminal de télécommunication (30) dont la localisation est connue ; ledit procédé étant **caractérisé en ce qu'**il comprend au moins un ensemble d'étapes parmi les premier et deuxième sous-ensembles d'étapes suivants mises en oeuvre dans un module électronique de calcul de géolocalisation, telles que selon le premier sous-ensemble d'étapes :

- pour chacun de N des signaux reçus à des instants t successifs par le premier terminal (20) et étant donné la fréquence de réception de référence prédéterminée ($f_{DL}$) des signaux, N étant supérieur ou égal à 3, détermination (101) de la variation de fréquence ΔF(t) du signal reçu due à l'effet Doppler en calculant la différence entre la fréquence de réception dudit signal et fréquence de réception de référence prédéterminée ;
- considérant chaque valeur successive ΔF(t) déterminée à chacun des N instants t successifs et considérant qu'en outre ΔF(t) vérifie la formule théorique suivante considérée à chacun desdits instant t

$$\Delta F(t) = \frac{\left( \overrightarrow{V_{TX}(t)} - \overrightarrow{V_{sat}(t)} \mid \overrightarrow{u_{TxSat}(t)} \right) * f_{UL}(t)}{c} + \frac{\left( \overrightarrow{V_{Sat}(t)} - \overrightarrow{V_{RX}(t)} \mid \overrightarrow{u_{SatRx}(t)} \right) * f_{DL}(t)}{c}$$

avec (... | ...) : produit scalaire euclidien ;
$\overrightarrow{v_{TX}(t)}$ : vecteur vitesse, considéré comme connu, du deuxième terminal (30) à l'instant t ;
$\overrightarrow{V_{sat}(t)}$ : vecteur vitesse connue du satellite à l'instant t ;
$\overrightarrow{u_{TxSat}(t)}$ : vecteur directeur unitaire, connu, entre le satellite et le deuxième terminal (30) à l'instant t ;
$f_{UL}(t)$ : fréquence, connue, de la liaison montante à l'instant t ;
c : célérité de la lumière dans le vide ;
$\overrightarrow{V_{RX}(t)}$ : le vecteur vitesse du premier terminal (20) que l'on cherche à localiser à l'instant t, considéré comme connu ;

$\overline{u_{SatRx}(t)}$: vecteur directeur unitaire, inconnu, entre le premier terminal (20) et le satellite à l'instant t ;

$f_{DL}(t)$ : fréquence, connue, de la liaison descendante à l'instant t ;

déterminer (103) la géolocalisation du premier terminal (20) à au moins un desdits instants t correspondant à celle vers laquelle pointe le vecteur $\overline{u_{SatRx}(t)}$ depuis le satellite à l'instant t ;

et selon le deuxième sous-ensemble d'étapes :

- pour chacun de N des signaux reçus à des instants t successifs par le premier terminal (20), N étant supérieur ou égal à 3, détermination (101) du temps de transit TT(t) du signal en calculant la différence entre l'instant de réception dudit signal et l'instant d'émission ;

- considérant chaque valeur successive TT(t) déterminée à chacun des N instants t successifs et considérant qu'en outre TT(t) vérifie la formule théorique suivante considérée à chacun desdits instant t :

$$TT(t) = \frac{1}{c} \left( \sqrt{(X_{Tx}(t) - X_{Sat}(t))^2 + (Y_{Tx}(t) - Y_{Sat}(t))^2 + (Z_{Tx}(t) - Z_{Sat}(t))^2} \right.$$
$$\left. + \sqrt{(X_{Rx}(t) - X_{Sat}(t))^2 + (Y_{Rx}(t) - Y_{Sat}(t))^2 + (Z_{Rx}(t) - Z_{Sat}(t))^2} \right)$$

avec :

$(X_{Sat}(t); Y_{Sat}(t); Z_{Sat}(t))$ : les coordonnées, connues, du satellite à l'instant t ;

$(X_{Tx}(t); Y_{Tx}(t); Z_{Tx}(t))$ : les coordonnées, inconnues, du premier terminal (20) à l'instant t ;

$(X_{Rx}(t); Y_{Rx}(t); Z_{Rx}(t))$ : les coordonnées, connues, du deuxième terminal (30) à l'instant t ;

déterminer (103) la géolocalisation du premier terminal (20) à au moins un desdits instants t comme étant égale à $(X_{Tx}(t); Y_{Tx}(t); Z_{Tx}(t))$,

**caractérisé en ce que** le module électronique de calcul de géolocalisation (40) met en oeuvre itérativement les étapes suivantes sur une fenêtre temporelle déterminée:

i/ considérant chaque première valeur successive ΔF(t) déterminée, respectivement chaque valeur successive TT(t) déterminée pendant la fenêtre, déterminer les premiers coefficients polynomiaux d'un polynôme du premier ordre, respectivement d'un polynôme du second ordre, donnant lesdites valeurs successives ;

ii/ sur ladite fenêtre, et pour une première hypothèse de géolocalisation dudit terminal à localiser, calculer les valeurs théoriques ΔF(t), TT(t) à l'aide de la formule théorique correspondante et déterminer les deuxièmes coefficients polynomiaux d'un polynôme du premier ordre, respectivement d'un polynôme du second ordre, donnant lesdites valeurs calculées ;

iii/ calculer la valeur d'un estimateur de vraisemblance pour cette première hypothèse de géolocalisation ; comparer entre eux les premiers et les deuxièmes coefficients et déterminer un déplacement à partir de la première hypothèse de géolocalisation en fonction de ladite comparaison ;

iv/ réitérer les étapes précédentes avec la nouvelle hypothèse de géolocalisation ainsi déterminée suite audit déplacement ;

v/ choisir la géolocalisation correspondant à un minimum de l'estimateur de vraisemblance.

3. Procédé de géolocalisation selon la revendication 1 ou 2, selon lequel la détermination de la géolocalisation du premier terminal (20) par le module électronique de calcul de géolocalisation (40), comprend au moins une des deux étapes parmi :

- résolution du système d'équations, ou de dérivées temporelles de celles-ci, défini par les N égalités entre chaque valeur successive ΔF(t) ou TT(t), déterminée à chacun des instants t successifs et par ladite formule théorique correspondante considérée audit instant t ;

- mise en oeuvre d'une localisation itérative selon laquelle :

i/ un maillage de la zone de couverture satellite ayant été préalablement réalisé avec une association en chaque point du maillage avec un profil précalculé donnant l'évolution temporelle de ΔF(t) telle que définie par ladite formule théorique, ou d'une dérivée temporelle de ΔF(t), respectivement avec un profil précalculé donnant l'évolution temporelle de TT(t) telle que définie par ladite formule théorique, ou d'une dérivée temporelle de TT(t), une comparaison a lieu entre les profils précalculés dans au moins une partie de la zone associée et le profil décrit par les valeurs déterminées successives ΔF(t), ou par sa dérivée temporelle de ΔF(t), respectivement le profil décrit par les valeurs déterminées TT(t), ou par une dérivée temporelle de TT(t) ;

ii/ le point du maillage associé au profil précalculé déterminé, en fonction de ladite comparaison, le plus proche parmi les profils précalculés comparés, est déterminé comme point de géolocalisation du premier terminal (20) pour l'itération courante ; et

iii/ à l'itération suivante, les étapes i et ii sont réitérés au sein d'une sous-zone de couverture autour dudit point de géolocalisation avec un maillage plus fin que le maillage précédemment considéré.

4. Procédé de géolocalisation d'un premier terminal de télécommunication (20) selon l'une des revendications précédentes, selon lequel ledit module électronique de calcul de géolocalisation est intégré dans celui parmi le premier terminal (20) et le deuxième terminal (30) ayant reçus lesdits N signaux.

5. Procédé de géolocalisation d'un premier terminal de télécommunication (20) selon l'une des revendications précédentes, selon lequel le vecteur vitesse du premier terminal (20) est choisi comme correspondant à la vitesse de la rotation de la terre.

6. Programme d'ordinateur comprenant des instructions logicielles, qui lorsqu'elles sont exécutées sur un processeur d'un module électronique de calcul de géolocalisation, mettent en oeuvre un procédé selon l'une quelconque des revendications précédentes.

7. Dispositif de géolocalisation (40) d'un premier terminal de télécommunication satellite (20) adapté pour géolocaliser ledit premier terminal de télécommunication (20) en fonction de signaux échangés par ledit premier terminal (20), sur une liaison de télécommunication satellite (3, 4) via un satellite défilant transparent (10), avec un deuxième terminal de télécommunication satellite (30) dont la localisation est connue ;

ledit dispositif (40) étant **caractérisé en ce qu'**il est adapté, pour chacun de N des signaux reçus à des instants t successifs par le deuxième terminal (30) et étant donné la fréquence de réception de référence prédéterminée ($f_{DL}$) des signaux, N étant supérieur ou égal à 3, pour déterminer la variation de fréquence ΔF(t) du signal reçu due à l'effet Doppler en calculant la différence entre la fréquence de réception dudit signal et fréquence de réception de référence prédéterminée ; et ledit dispositif (40) étant adapté pour, considérant chaque valeur successive ΔF(t) calculée à chacun des N instants t successifs et considérant qu'en outre ΔF(t) vérifie la formule théorique suivante considérée à chacun desdits instants t :

$$\Delta F(t) = \frac{\left(\overrightarrow{V_{TX}(t)}-\overrightarrow{V_{sat}(t)}\,\middle|\,\overrightarrow{u_{TxSat}(t)}\right)*f_{UL}(t)}{c} + \frac{\left(\overrightarrow{V_{Sat}(t)}-\overrightarrow{V_{RX}(t)}\,\middle|\,\overrightarrow{u_{SatRx}(t)}\right)*f_{DL}(t)}{c}$$

avec :

(... | ...) : produit scalaire euclidien ;
$\overrightarrow{v_{TX}(t)}$ : le vecteur vitesse du premier terminal (20) que l'on cherche à localiser à l'instant t, considéré comme connu ;
$\overrightarrow{V_{sat}(t)}$ : vecteur vitesse connue du satellite à l'instant t ;
$\overrightarrow{u_{TxSat}(t)}$ : vecteur directeur unitaire, inconnu, entre le premier terminal (20) et le satellite à l'instant t ;
$f_{UL}(t)$ : fréquence, connue, de la liaison montante à l'instant t ;
c : célérité de la lumière dans le vide ;
$\overrightarrow{V_{RX}(t)}$ : vecteur vitesse, considéré comme connu, du deuxième terminal (30) à l'instant t ;
$\overrightarrow{u_{SatRx}(t)}$ : vecteur directeur unitaire, connu, entre le satellite et le deuxième terminal (30) à l'instant t ;
$f_{DL}(t)$ : fréquence, connue, de la liaison descendante à l'instant t ;

déterminer la géolocalisation du premier terminal (20) à au moins un desdits instants t, correspondant à celle à partir de laquelle le vecteur $\overrightarrow{u_{TxSat}(t)}$ pointe vers le satellite ;
et/ou ledit dispositif étant **caractérisé en ce qu'**il est adapté, pour chacun de N des signaux reçus à des instants t successifs par le deuxième terminal (30), N étant supérieur ou égal à 3, pour déterminer le temps de transit TT(t) du signal en calculant la différence entre l'instant de réception dudit signal et l'instant d'émission ;

ledit dispositif étant adapté pour, considérant chaque valeur successive TT(t) calculée à chacun des N instants t successifs et considérant qu'en outre TT(t) vérifie la formule théorique suivante considérée à chacun desdits instant t :

$$TT(t) = \frac{1}{c}\left(\sqrt{(X_{Tx}(t) - X_{Sat}(t))^2 + (Y_{Tx}(t) - Y_{Sat}(t))^2 + (Z_{Tx}(t) - Z_{Sat}(t))^2}\right.$$
$$\left. + \sqrt{(X_{Rx}(t) - X_{Sat}(t))^2 + (Y_{Rx}(t) - Y_{Sat}(t))^2 + (Z_{Rx}(t) - Z_{Sat}(t))^2}\right)$$

avec :

$(X_{Sat}(t); Y_{Sat}(t); Z_{Sat}(t))$ : les coordonnées, connues, du satellite à l'instant t ;
$(X_{Tx}(t); Y_{Tx}(t); Z_{Tx}(t))$ : les coordonnées, inconnues, du premier terminal (20) à l'instant t ;
$(X_{Rx}(t); Y_{Rx}(t); Z_{Rx}(t))$ : les coordonnées, connues, du deuxième terminal (30) à l'instant t.

déterminer la géolocalisation du premier terminal (20) à au moins un desdits instants t comme étant égale à $(X_{Tx}(t); Y_{Tx}(t); Z_{Tx}(t))$,
**caractérisé en ce que** le dispositif de géolocalisation (40) est adapté pour, itérativement sur une fenêtre temporelle déterminée:

i/ considérant chaque première valeur successive ΔF(t) déterminée, respectivement chaque valeur successive TT(t) déterminée pendant la fenêtre, déterminer les premiers coefficients polynomiaux d'un polynôme du premier ordre, respectivement d'un polynôme du second ordre, donnant lesdites valeurs successives ;
ii/ sur ladite fenêtre, et pour une première hypothèse de géolocalisation dudit terminal à localiser, calculer les valeurs théoriques ΔF(t), TT(t) à l'aide de la formule théorique correspondante et déterminer les deuxièmes coefficients polynomiaux d'un polynôme du premier ordre, respectivement d'un polynôme du second ordre, donnant lesdites valeurs calculées ;
iii/ calculer la valeur d'un estimateur de vraisemblance pour cette première hypothèse de géolocalisation ; comparer entre eux les premiers et les deuxièmes coefficients et déterminer un déplacement à partir de la première hypothèse de géolocalisation en fonction de ladite comparaison ;
iv/ réitérer les étapes précédentes avec la nouvelle hypothèse de géolocalisation ainsi déterminée suite audit déplacement ;
v/ choisir la géolocalisation correspondant à un minimum de l'estimateur de vraisemblance.

8. Dispositif de géolocalisation (40) d'un premier terminal de télécommunication (20), adapté pour géolocaliser ledit premier terminal de télécommunication (20) en fonction de signaux échangés par ledit premier terminal (20), sur une liaison de télécommunication satellite via un satellite défilant transparent (10), avec un deuxième terminal de télécommunication (30) dont la localisation est connue ;

ledit dispositif étant **caractérisé en ce qu'**il est adapté, pour chacun de N des signaux reçus à des instants t successifs par le premier terminal (20) et étant donné la fréquence de réception de référence prédéterminée ($f_{DL}$) des signaux, N étant supérieur ou égal à 3, pour déterminer la variation de fréquence ΔF(t) du signal reçu due à l'effet Doppler en calculant la différence entre la fréquence de réception dudit signal et fréquence de réception de référence prédéterminée ; ledit dispositif étant adapté pour, considérant chaque valeur successive ΔF(t) déterminée à chacun des N instants t successifs et considérant qu'en outre ΔF(t) vérifie la formule théorique suivante considérée à chacun desdits instant t

$$\Delta F(t) = \frac{\left(\overrightarrow{V_{TX}(t)} - \overrightarrow{V_{sat}(t)} \mid \overrightarrow{u_{TxSat}(t)}\right) * f_{UL}(t)}{c} + \frac{\left(\overrightarrow{V_{Sat}(t)} - \overrightarrow{V_{RX}(t)} \mid \overrightarrow{u_{SatRx}(t)}\right) * f_{DL}(t)}{c}$$

avec (... | ...) : produit scalaire euclidien ;
$\overrightarrow{v_{TX}(t)}$ : vecteur vitesse, considéré comme connu, du deuxième terminal (30) à l'instant t ;
$\overrightarrow{V_{sat}(t)}$ : vecteur vitesse connue du satellite à l'instant t ;
$\overrightarrow{u_{TxSat}(t)}$ : vecteur directeur unitaire, connu, entre le satellite et le deuxième terminal (30) à l'instant t ;
$f_{UL}(t)$ : fréquence, connue, de la liaison montante à l'instant t ;

c : célérité de la lumière dans le vide ;

$\overline{V_{RX}(t)}$ : le vecteur vitesse du premier terminal (20) que l'on cherche à localiser à l'instant t, considéré comme connu ;

$\overline{u_{SatRx}(t)}$ : vecteur directeur unitaire, inconnu, entre le premier terminal (20) et le satellite à l'instant t ;

$f_{DL}(t)$ : fréquence, connue, de la liaison descendante à l'instant t ;

déterminer la géolocalisation du premier terminal (20) à au moins un desdits instants t correspondant à celle vers laquelle pointe le vecteur $\overline{u_{SatRx}(t)}$ depuis le satellite à l'instant t ;

et/ou ledit dispositif étant adapté, pour chacun de N des signaux reçus à des instants t successifs par le premier terminal (20), N étant supérieur ou égal à 3, pour déterminer le temps de transit TT(t) du signal en calculant la différence entre l'instant de réception dudit signal et l'instant d'émission ; ledit dispositif étant adapté pour, considérant chaque valeur successive TT(t) déterminée à chacun des N instants t successifs et considérant qu'en outre TT(t) vérifie la formule théorique suivante considérée à chacun desdits instant t :

$$TT(t) = \frac{1}{c}\left(\sqrt{(X_{Tx}(t) - X_{Sat}(t))^2 + (Y_{Tx}(t) - Y_{Sat}(t))^2 + (Z_{Tx}(t) - Z_{Sat}(t))^2} \right.$$
$$\left. + \sqrt{(X_{Rx}(t) - X_{Sat}(t))^2 + (Y_{Rx}(t) - Y_{Sat}(t))^2 + (Z_{Rx}(t) - Z_{Sat}(t))^2}\right)$$

avec :

$(X_{Sat}(t); Y_{Sat}(t); Z_{Sat}(t))$ : les coordonnées, connues, du satellite à l'instant t ;

$(X_{Tx}(t); Y_{Tx}(t); Z_{Tx}(t))$ : les coordonnées, inconnues, du premier terminal (20) à l'instant t ;

$(X_{Rx}(t); Y_{Rx}(t); Z_{Rx}(t))$ : les coordonnées, connues, du deuxième terminal (30) à l'instant t ;

déterminer la géolocalisation du premier terminal (20) à au moins un desdits instants t comme étant égale à $(X_{Tx}(t); Y_{TX}(t); Z_{Tx}(t))$,

**caractérisé en ce que** le dispositif de géolocalisation (40) est adapté pour, itérativement sur une fenêtre temporelle déterminée:

i/ considérant chaque première valeur successive ΔF(t) déterminée, respectivement chaque valeur successive TT(t) déterminée pendant la fenêtre, déterminer les premiers coefficients polynomiaux d'un polynôme du premier ordre, respectivement d'un polynôme du second ordre, donnant lesdites valeurs successives ;

ii/ sur ladite fenêtre, et pour une première hypothèse de géolocalisation dudit terminal à localiser, calculer les valeurs théoriques ΔF(t), TT(t) à l'aide de la formule théorique correspondante et déterminer les deuxièmes coefficients polynomiaux d'un polynôme du premier ordre, respectivement d'un polynôme du second ordre, donnant lesdites valeurs calculées ;

iii/ calculer la valeur d'un estimateur de vraisemblance pour cette première hypothèse de géolocalisation ; comparer entre eux les premiers et les deuxièmes coefficients et déterminer un déplacement à partir de la première hypothèse de géolocalisation en fonction de ladite comparaison ;

iv/ réitérer les étapes précédentes avec la nouvelle hypothèse de géolocalisation ainsi déterminée suite audit déplacement ;

v/ choisir la géolocalisation correspondant à un minimum de l'estimateur de vraisemblance.

9. Dispositif de géolocalisation (40) selon l'une des revendications 7 ou 8, adapté, dans la détermination de la géolocalisation du premier terminal (20), pour résoudre le système des équations, ou des dérivées temporelles de celles-ci, défini par les N égalités entre chaque valeur successive ΔF(t) ou TT(t), déterminée à chacun des instants t successifs et par ladite formule théorique correspondante considérée audit instant t ;

et/ou dans la détermination de la géolocalisation du premier terminal (20), pour mettre en oeuvre une localisation itérative selon laquelle :

i/ un maillage de la zone de couverture satellite ayant été préalablement réalisé avec une association en chaque point du maillage avec un profil précalculé donnant l'évolution temporelle de ΔF(t) telle que définie par ladite formule théorique, ou d'une dérivée temporelle de ΔF(t), respectivement avec un profil précalculé donnant l'évolution temporelle de TT(t) telle que définie par ladite formule théorique, ou d'une dérivée temporelle de TT(t), le dispositif est adapté pour comparer les profils précalculés dans au moins une partie de la zone associée et le profil décrit par les valeurs déterminées successives ΔF(t), ou par sa dérivée temporelle de ΔF(t), respectivement le profil décrit par les valeurs déterminées TT(t), ou par une dérivée temporelle de TT(t) ;
ii/ le dispositif est adapté pour déterminer comme point de géolocalisation du premier terminal (20) pour l'itération courante, le point du maillage associé au profil précalculé déterminé, en fonction de ladite comparaison, le plus proche parmi les profils précalculés comparés ; et
iii/ à l'itération suivante, le dispositif est adapté pour réitérer les opérations i et ii au sein d'une sous-zone de couverture autour dudit point de géolocalisation avec un maillage plus fin que le maillage précédemment considéré.

**Patentansprüche**

1. Verfahren zur Geolokalisierung eines ersten Satelliten-Telekommunikationsendgeräts (20) abhängig von Signalen, die von dem ersten Telekommunikationsendgerät (20) auf einer Satelliten-Telekommunikationsverbindung (3, 4) über einen transparenten Umlaufsatelliten (10) mit einem zweiten Telekommunikationsendgerät (30) ausgetauscht werden, dessen Position bekannt ist; wobei das Verfahren **dadurch gekennzeichnet ist, dass** es mindestens eine Gruppe von Schritten aus den folgenden ersten und zweiten Gruppen von Schritten umfasst, die in einem elektronischen Geolokalisierungsberechnungsmodul (40) umgesetzt werden, wie gemäß der ersten Gruppe von Schritten:

- für jedes von N der Signale, die zu aufeinanderfolgenden Zeitpunkten t von dem zweiten Endgerät (30) empfangen werden und wobei die vorbestimmte Referenzempfangsfrequenz ($f_{DL}$) der Signale gegeben ist, wobei N größer als oder gleich wie 3 ist, Bestimmen (101) der Frequenzänderung ΔF(t) des empfangenen Signals aufgrund des Dopplereffekts durch Berechnen der Differenz zwischen der Empfangsfrequenz des Signals und der vorbestimmten Referenzempfangsfrequenz;
- unter Berücksichtigung von jedem aufeinanderfolgenden Wert ΔF(t), der zu jedem der N aufeinanderfolgenden Zeitpunkte t bestimmt wird, und unter Berücksichtigung, dass ferner ΔF(t) die folgende theoretische Formel erfüllt, die zu jedem der genannten Zeitpunkte t betrachtet wird:

$$\Delta F(t) = \frac{\langle \overrightarrow{V_{TX}(t)} - \overrightarrow{V_{sat}(t)} | \overrightarrow{u_{TxSat}(t)} \rangle * f_{UL}(t)}{c} + \frac{\langle \overrightarrow{V_{Sat}(t)} - \overrightarrow{V_{RX}(t)} | \overrightarrow{u_{SatRx}(t)} \rangle * f_{DL}(t)}{c}$$

wobei:

<... | ...>: euklidisches Skalarprodukt;
$\overline{V_{Tx}(t)}$: der Geschwindigkeitsvektor des ersten Endgeräts (20), das zum als bekannt betrachteten Zeitpunkt t lokalisiert werden soll;
$\overline{V_{Sat}(t)}$: bekannter Geschwindigkeitsvektor des Satelliten zum Zeitpunkt t;
$\overline{u_{TxSat}(t)}$: unbekannter, einheitlicher Richtungsvektor zwischen dem ersten Endgerät (20) und dem Satelliten zum Zeitpunkt t;
$f_{UL}(t)$: bekannte Frequenz des Uplink zum Zeitpunkt t;
c: Lichtgeschwindigkeit im Vakuum;
$\overline{V_{Rx}(t)}$: Geschwindigkeitsvektor, betrachtet als bekannt, des zweiten Endgeräts (30) zum Zeitpunkt t;
$\overline{u_{SatRx}(t)}$: bekannter, einheitlicher Richtungsvektor zwischen dem Satelliten und dem zweiten Endgerät (30) zum Zeitpunkt t;
$f_{DL}(t)$: bekannte Frequenz des Downlinks zum Zeitpunkt t;

Bestimmen (103) der Geolokalisierung des ersten Endgeräts (20) zu mindestens einem der Zeitpunkte t, die jener entspricht, auf die der Vektor $\overline{u_{TxSat}(t)}$ von dem Satelliten zeigt;
und wie gemäß der zweiten Gruppe von Schritten:

- für jedes der N Signale, die zu aufeinanderfolgenden Zeitpunkten t von dem zweiten Endgerät (30) empfangen werden, wobei N größer als oder gleich wie 3 ist, Bestimmen (101) der Laufzeit TT(t) des Signals durch Berechnen der Differenz zwischen dem Empfangszeitpunkt des Signals und dem Sendezeitpunkt;
- unter Berücksichtigung von jedem aufeinanderfolgenden Wert TT(t), der zu jedem der N aufeinanderfolgenden Zeitpunkte t bestimmt wird, und unter Berücksichtigung, dass ferner TT(t) die folgende theoretische Formel erfüllt, die zu jedem der genannten Zeitpunkte t betrachtet wird:

$$TT(t) = \frac{1}{c}\left(\sqrt{(X_{Tx}(t) - X_{Sat}(t))^2 + (Y_{Tx}(t) - Y_{Sat}(t))^2 + (Z_{Tx}(t) - Z_{Sat}(t))^2}\right.$$

$$\left. + \sqrt{(X_{Rx}(t) - X_{Sat}(t))^2 + (Y_{Rx}(t) - Y_{Sat}(t))^2 + (Z_{Rx}(t) - Z_{Sat}(t))^2}\right)$$

wobei:

$(X_{Sat}(t);Y_{Sat}(t);Z_{Sat}(t))$: die bekannten Koordinaten des Satelliten zum Zeitpunkt t;
$(X_{Tx}(t);Y_{Tx}(t);Z_{Tx}(t))$: die unbekannten Koordinaten des ersten Endgeräts (20) zum Zeitpunkt t;
$(X_{Rx}(t), Y_{Rx}(t),Z_{Rx}(t))$: die bekannten Koordinaten des zweiten Endgeräts (30) zum Zeitpunkt t.

Bestimmen (103) der Geolokalisierung des ersten Endgeräts (20) zu mindestens einem der Zeitpunkte t als gleich $(X_{Tx}(t);Y_{Tx}(t);Z_{Tx}(t))$,
**dadurch gekennzeichnet, dass** das elektronische GeolokalisierungsBerechnungsmodul (40) die folgenden Schritte über ein bestimmtes Zeitfenster iterativ durchführt:

i/ unter Berücksichtigung von jedem bestimmten ersten aufeinanderfolgenden Wert ΔF(t) bzw. jedem während des Fensters bestimmten aufeinanderfolgenden Wert TT(t), Bestimmen der ersten Polynomkoeffizienten eines Polynoms erster Ordnung bzw. eines Polynoms zweiter Ordnung, die die aufeinanderfolgenden Werte ergeben;
ii/ in dem Fenster und für eine erste Geolokalisierungshypothese des zu lokalisierenden Endgeräts, Berechnen der theoretischen Werte ΔF(t), TT(t) mittels der entsprechenden theoretischen Formel und Bestimmen der zweiten Polynomkoeffizienten eines Polynoms erster Ordnung bzw. eines Polynoms zweiter Ordnung, die die berechneten Werte ergeben;
iii/ Berechnen des Werts eines Wahrscheinlichkeitsschätzers für diese erste Geolokalisierungshypothese; Vergleichen der ersten und der zweiten Koeffizienten miteinander und Bestimmen einer Bewegung anhand der ersten Geolokalisierungshypothese basierend auf dem Vergleich;
iv/ Wiederholen der vorherigen Schritte mit der neuen Geolokalisierungshypothese, die infolge der Bewegung bestimmt wird;
v/ Auswählen der Geolokalisierung, die einem Minimum des Wahrscheinlichkeitsschätzers entspricht.

2. Verfahren zur Geolokalisierung eines ersten Satelliten-Telekommunikationsendgeräts (20) abhängig von Signalen, die von dem ersten Telekommunikationsendgerät (20) auf einer Satelliten-Telekommunikationsverbindung über einen transparenten Umlaufsatelliten (10) mit einem zweiten Telekommunikationsendgerät (30) ausgetauscht werden, dessen Position bekannt ist; wobei das Verfahren **dadurch gekennzeichnet ist, dass** es mindestens eine Gruppe von Schritten aus den folgenden ersten und zweiten Teilgruppen von Schritten umfasst, die in einem elektronischen Geolokalisierungsberechnungsmodul umgesetzt werden, wie gemäß der ersten Teilgruppe von Schritten:

- für jedes von N der Signale, die zu aufeinanderfolgenden Zeitpunkten t von dem ersten Endgerät (20) empfangen werden und wobei die vorbestimmte Referenzempfangsfrequenz ($f_{DL}$) der Signale gegeben ist, wobei N größer als oder gleich wie 3 ist, Bestimmen (101) der Frequenzänderung ΔF(t) des empfangenen Signals aufgrund des Dopplereffekts durch Berechnen der Differenz zwischen der Empfangsfrequenz des Signals und der vorbestimmten Referenzempfangsfrequenz;
- unter Berücksichtigung von jedem aufeinanderfolgenden Wert ΔF(t), der zu jedem der N aufeinanderfolgenden Zeitpunkte t bestimmt wird, und unter Berücksichtigung, dass ferner ΔF(t) die folgende theoretische Formel erfüllt, die zu jedem der genannten Zeitpunkte t betrachtet wird

$$\Delta F(t) = \frac{\langle \overrightarrow{V_{TX}(t)} - \overrightarrow{V_{sat}(t)} \mid \overrightarrow{u_{TxSat}(t)}\rangle * f_{UL}(t)}{c} + \frac{\langle \overrightarrow{V_{Sat}(t)} - \overrightarrow{V_{RX}(t)} \mid \overrightarrow{u_{SatRx}(t)}\rangle * f_{DL}(t)}{c}$$

wobei <... | ...>: euklidisches Skalarprodukt;
$\overrightarrow{V_{Tx}(t)}$: Geschwindigkeitsvektor, betrachtet als bekannt, des zweiten Endgeräts (30) zum Zeitpunkt t;

$\overline{V_{Sat}(t)}$: bekannter Geschwindigkeitsvektor des Satelliten zum Zeitpunkt t;

$\overline{u_{TxSat}(t)}$: bekannter, einheitlicher Richtungsvektor zwischen dem Satelliten und dem zweiten Endgerät (30) zum Zeitpunkt t;

$f_{UL}(t)$: bekannte Frequenz des Uplink zum Zeitpunkt t;

c: Lichtgeschwindigkeit im Vakuum;

$\overline{V_{Rx}(t)}$: der Geschwindigkeitsvektor, betrachtet als bekannt, des ersten Endgeräts (20), das zum als bekannt betrachteten Zeitpunkt t lokalisiert werden soll;

$\overline{u_{SatRx}(t)}$: unbekannter, einheitlicher Richtungsvektor zwischen dem ersten Endgerät (20) und dem Satelliten zum Zeitpunkt t;

$f_{DL}(t)$: bekannte Frequenz des Downlinks zum Zeitpunkt t;

Bestimmen (103) der Geolokalisierung des ersten Endgeräts (20) zu mindestens einem der Zeitpunkte t, die derjenigen entspricht, auf die der Vektor $\overline{u_{SatRx}(t)}$ vom Satelliten zum Zeitpunkt t zeigt; und gemäß der zweiten Teilgruppe von Schritten:

- für jedes der N Signale, die zu aufeinanderfolgenden Zeitpunkten t von dem ersten Endgerät (20) empfangen werden, wobei N größer als oder gleich wie 3 ist, Bestimmen (101) der Laufzeit TT(t) des Signals durch Berechnen der Differenz zwischen dem Empfangszeitpunkt des Signals und dem Sendezeitpunkt;

- unter Berücksichtigung von jedem aufeinanderfolgenden Wert TT(t), der zu jedem der N aufeinanderfolgenden Zeitpunkte t bestimmt wird, und unter Berücksichtigung, dass ferner TT(t) die folgende theoretische Formel erfüllt, die zu jedem der genannten Zeitpunkte t betrachtet wird:

$$TT(t) = \frac{1}{c}\left(\sqrt{(X_{Tx}(t) - X_{Sat}(t))^2 + (Y_{Tx}(t) - Y_{Sat}(t))^2 + (Z_{Tx}(t) - Z_{Sat}(t))^2}\right.$$
$$\left. + \sqrt{(X_{Rx}(t) - X_{Sat}(t))^2 + (Y_{Rx}(t) - Y_{Sat}(t))^2 + (Z_{Rx}(t) - Z_{Sat}(t))^2}\right)$$

wobei:

$(X_{Sat}(t); Y_{Sat}(t); Z_{Sat}(t))$: die bekannten Koordinaten des Satelliten zum Zeitpunkt t;
$(X_{Tx}(t); Y_{Tx}(t); Z_{Tx}(t))$: die unbekannten Koordinaten des ersten Endgeräts (20) zum Zeitpunkt t;
$(X_{Rx}(t); Y_{Rx}(t); Z_{Rx}(t))$: die bekannten Koordinaten des zweiten Endgeräts (30) zum Zeitpunkt t;

Bestimmen (103) der Geolokalisierung des ersten Endgeräts (20) zu mindestens einem der Zeitpunkte t als gleich $(X_{Tx}(t); Y_{Tx}(t); Z_{Tx}(t))$,
**dadurch gekennzeichnet, dass** das elektronische GeolokalisierungsBerechnungsmodul (40) die folgenden Schritte über ein bestimmtes Zeitfenster iterativ durchführt:

i/ unter Berücksichtigung von jedem bestimmten ersten aufeinanderfolgenden Wert ΔF(t) bzw. jedem während des Fensters bestimmten aufeinanderfolgenden Wert TT(t), Bestimmen der ersten Polynomkoeffizienten eines Polynoms erster Ordnung bzw. eines Polynoms zweiter Ordnung, die die aufeinanderfolgenden Werte ergeben;

ii/ in dem Fenster und für eine erste Geolokalisierungshypothese des zu lokalisierenden Endgeräts, Berechnen der theoretischen Werte ΔF(t), TT(t) mittels der entsprechenden theoretischen Formel und Bestimmen der zweiten Polynomkoeffizienten eines Polynoms erster Ordnung bzw. eines Polynoms zweiter Ordnung, die die berechneten Werte ergeben;

iii/ Berechnen des Werts eines Wahrscheinlichkeitsschätzers für diese erste Geolokalisierungshypothese; Vergleichen der ersten und der zweiten Koeffizienten miteinander und Bestimmen einer Bewegung anhand der ersten Geolokalisierungshypothese basierend auf dem Vergleich;

iv/ Wiederholen der vorherigen Schritte mit der neuen Geolokalisierungshypothese, die infolge der Bewegung bestimmt wird;

v/ Auswählen der Geolokalisierung, die einem Minimum des Wahrscheinlichkeitsschätzers entspricht.

3. Geolokalisierungsverfahren nach Anspruch 1 oder 2, wobei die Bestimmung der Geolokalisierung des ersten Endgeräts (20) durch das elektronische Geolokalisierungsberechnungsmodul (40) mindestens einen der zwei Schritte aus Folgenden umfasst:

- Lösen des Gleichungssystems oder zeitlicher Ableitungen davon, definiert durch die N Gleichheiten zwischen jedem aufeinanderfolgenden Wert ΔF(t) oder TT(t), der zu jedem der aufeinanderfolgenden Zeitpunkte t bestimmt wird, und der entsprechenden theoretischen Formel, die zum Zeitpunkt t betrachtet wird;
- Durchführen einer iterativen Lokalisierung, bei der:

i/ ein Netz des Satellitenabdeckungsbereichs, das zuvor mit einer Zuordnung an jedem Punkt des Netzes mit einem vorberechneten Profil, das die zeitliche Entwicklung von ΔF(t), wie durch die theoretische Formel definiert, oder einer zeitlichen Ableitung von ΔF(t) gibt, bzw. mit einem vorberechneten Profil, das die zeitliche Entwicklung von TT(t), wie durch die theoretische Formel definiert, gibt, erstellt wurde, oder einer zeitlichen Ableitung von TT(t), ein Vergleich zwischen den vorberechneten Profilen in mindestens einem Teil des assoziierten Bereichs und dem durch die aufeinanderfolgenden bestimmten Werte ΔF(t) oder durch seine zeitliche Ableitung von ΔF(t) beschriebenen Profil bzw. dem durch die bestimmten Werte TT(t) oder durch eine zeitliche Ableitung von TT(t) beschriebenen Profil erfolgt;
ii/ der Punkt des Netzes, der mit dem vorberechneten Profil assoziiert ist, das abhängig von dem Vergleich als das nächstliegende der verglichenen vorberechneten Profile bestimmt wird, als Geolokalisierungspunkt des ersten Endgeräts (20) für die aktuelle Iteration bestimmt wird; und
iii/ in der nächsten Iteration die Schritte i und ii innerhalb eines Teilbereichs der Abdeckung um den genannten Geolokalisierungspunkt mit einem feineren Netz als das zuvor betrachtete Netz wiederholt werden.

4. Verfahren zur Geolokalisierung eines ersten Telekommunikationsendgeräts (20) nach einem der vorherigen Ansprüche, wobei das elektronische Geolokalisierungsberechnungsmodul in jenes von dem ersten Endgerät (20) und dem zweiten Endgerät (30) integriert ist, das die N Signale empfangen hat.

5. Verfahren zur Geolokalisierung eines ersten Telekommunikationsendgeräts (20) nach einem der vorherigen Ansprüche, wobei der Geschwindigkeitsvektor des ersten Endgeräts (20) gewählt wird, sodass er der Geschwindigkeit der Erdrotation entspricht.

6. Computerprogramm, umfassend Softwareanweisungen, die, wenn sie auf einem Prozessor eines elektronischen Geolokalisierungsberechnungsmoduls ausgeführt werden, ein Verfahren nach einem der vorherigen Ansprüche durchführen.

7. Vorrichtung zur Geolokalisierung (40) eines ersten Satelliten-Telekommunikationsendgeräts (20), die angepasst ist, um das erste Telekommunikationsendgerät (20) abhängig von Signalen zu geolokalisieren, die von dem ersten Endgerät (20) auf einer Satelliten-Telekommunikationsverbindung (3, 4) über einen transparenten Umlaufsatelliten (10) mit einem zweiten Telekommunikationsendgerät (30) ausgetauscht werden, dessen Position bekannt ist; wobei die Vorrichtung (40) **dadurch gekennzeichnet ist, dass** sie für jedes von N der Signale, die zu aufeinanderfolgenden Zeitpunkten t von dem zweiten Endgerät (30) empfangen werden und wobei die vorbestimmte Referenzempfangsfrequenz ($f_{DL}$) der Signale gegeben ist, wobei N größer als oder gleich wie 3 ist, die Frequenzänderung ΔF(t) des empfangenen Signals aufgrund des Dopplereffekts durch Berechnen der Differenz zwischen der Empfangsfrequenz des Signals und der vorbestimmten Referenzempfangsfrequenz zu bestimmen; und wobei die Vorrichtung (40) angepasst ist, um unter Berücksichtigung von jedem aufeinanderfolgenden Wert ΔF(t), der zu jedem der N aufeinanderfolgenden Zeitpunkte t berechnet wird, und unter Berücksichtigung, dass außerdem ΔF(t) die folgende theoretische Formel erfüllt, die zu jedem der Zeitpunkte t betrachtet wird:

$$\Delta F(t) = \frac{\left\langle \overrightarrow{V_{TX}(t)} - \overrightarrow{V_{sat}(t)} \middle| \overrightarrow{u_{TxSat}(t)} \right\rangle * f_{UL}(t)}{c} + \frac{\left\langle \overrightarrow{V_{Sat}(t)} - \overrightarrow{V_{RX}(t)} \middle| \overrightarrow{u_{SatRx}(t)} \right\rangle * f_{DL}(t)}{c}$$

wobei:

<... | ...>: euklidisches Skalarprodukt;
$\overrightarrow{V_{Tx}(t)}$: der Geschwindigkeitsvektor, betrachtet als bekannt, des ersten Endgeräts (20), das zum als bekannt betrachteten Zeitpunkt t lokalisiert werden soll;
$\overrightarrow{V_{Sat}(t)}$: bekannter Geschwindigkeitsvektor des Satelliten zum Zeitpunkt t;
$\overrightarrow{u_{TxSat}(t)}$: unbekannter, einheitlicher Richtungsvektor zwischen dem ersten Endgerät (20) und dem Satelliten zum Zeitpunkt t;

$f_{UL}(t)$: bekannte Frequenz des Uplink zum Zeitpunkt t;

c: Lichtgeschwindigkeit im Vakuum;

$\overline{V_{Rx}(t)}$: Geschwindigkeitsvektor, betrachtet als bekannt, des zweiten Endgeräts (30) zum Zeitpunkt t;

$\overline{u_{SatRx}(t)}$: bekannter, einheitlicher Richtungsvektor zwischen dem Satelliten und dem zweiten Endgerät (30) zum Zeitpunkt t;

$f_{DL}(t)$: bekannte Frequenz des Downlinks zum Zeitpunkt t;

die Geolokalisierung des ersten Endgeräts (20) zu mindestens einem der Zeitpunkte t, der demjenigen entspricht, von dem aus der Vektor $\overline{u_{TxSat}(t)}$ auf den Satelliten zeigt, zu bestimmen;

und/oder wobei die Vorrichtung **dadurch gekennzeichnet ist, dass** sie angepasst ist, um für jedes von N der zu aufeinanderfolgenden Zeitpunkten t von dem zweiten Endgerät (30) empfangenen Signale, wobei N größer oder gleich 3 ist, angepasst ist, die Laufzeit TT(t) des Signals durch Berechnen der Differenz zwischen dem Empfangszeitpunkt des Signals und dem Sendezeitpunkt zu bestimmen; wobei die Vorrichtung angepasst ist, um unter Berücksichtigung von jedem aufeinanderfolgenden Wert TT(t), der zu jedem der N aufeinanderfolgenden Zeitpunkte t berechnet wird, und unter Berücksichtigung, dass ferner TT(t) die folgende theoretische Formel erfüllt, die zu jedem der genannten Zeitpunkte t betrachtet wird:

$$TT(t) = \frac{1}{c}\left(\sqrt{(X_{Tx}(t) - X_{Sat}(t))^2 + (Y_{Tx}(t) - Y_{Sat}(t))^2 + (Z_{Tx}(t) - Z_{Sat}(t))^2}\right.$$
$$\left. + \sqrt{(X_{Rx}(t) - X_{Sat}(t))^2 + (Y_{Rx}(t) - Y_{Sat}(t))^2 + (Z_{Rx}(t) - Z_{Sat}(t))^2}\right)$$

wobei:

$(X_{Sat}(t); Y_{Sat}(t); Z_{Sat}(t))$: die bekannten Koordinaten des Satelliten zum Zeitpunkt t;

$(X_{Tx}(t); Y_{Tx}(t); Z_{Tx}(t))$: die unbekannten Koordinaten des ersten Endgeräts (20) zum Zeitpunkt t;

$(X_{Rx}(t), Y_{Rx}(t), Z_{Rx}(t))$: die bekannten Koordinaten des zweiten Endgeräts (30) zum Zeitpunkt t.

Bestimmen der Geolokalisierung des ersten Endgeräts (20) zu mindestens einem der Zeitpunkte t als gleich $(X_{Tx}(t); Y_{Tx}(t); Z_{Tx}(t))$,

**dadurch gekennzeichnet, dass** die Geolokalisierungsvorrichtung (40) angepasst ist, um, iterativ über ein bestimmtes Zeitfenster:

i/ unter Berücksichtigung von jedem bestimmten ersten aufeinanderfolgenden Wert ΔF(t) bzw. jedem während des Fensters bestimmten aufeinanderfolgenden Wert TT(t), Bestimmen der ersten Polynomkoeffizienten eines Polynoms erster Ordnung bzw. eines Polynoms zweiter Ordnung, die die aufeinanderfolgenden Werte ergeben;

ii/ in dem Fenster und für eine erste Geolokalisierungshypothese des zu lokalisierenden Endgeräts, Berechnen der theoretischen Werte ΔF(t), TT(t) mittels der entsprechenden theoretischen Formel und Bestimmen der zweiten Polynomkoeffizienten eines Polynoms erster Ordnung bzw. eines Polynoms zweiter Ordnung, die die berechneten Werte ergeben;

iii/ Berechnen des Werts eines Wahrscheinlichkeitsschätzers für diese erste Geolokalisierungshypothese; Vergleichen der ersten und der zweiten Koeffizienten miteinander und Bestimmen einer Bewegung anhand der ersten Geolokalisierungshypothese basierend auf dem Vergleich;

iv/ Wiederholen der vorherigen Schritte mit der neuen Geolokalisierungshypothese, die infolge der Bewegung bestimmt wird;

v/ Auswählen der Geolokalisierung, die einem Minimum des Wahrscheinlichkeitsschätzers entspricht.

8. Vorrichtung zur Geolokalisierung (40) eines ersten Telekommunikationsendgeräts (20), die angepasst ist, um das erste Telekommunikationsendgerät (20) abhängig von Signalen zu geolokalisieren, die von dem ersten Endgerät (20) auf einer Satelliten-Telekommunikationsverbindung über einen transparenten Umlaufsatelliten (10) mit einem zweiten Telekommunikationsendgerät (30) ausgetauscht werden, dessen Position bekannt ist;

wobei die Vorrichtung **dadurch gekennzeichnet ist, dass** sie für jedes von N der Signale, die zu aufeinanderfolgenden Zeitpunkten t von dem zweiten Endgerät (20) empfangen werden und wobei die vorbestimmte Referenzempfangsfrequenz $(f_{DL})$ der Signale gegeben ist, wobei N größer als oder gleich wie 3 ist, die Frequenzänderung ΔF(t) des empfangenen Signals aufgrund des Dopplereffekts durch Berechnen der Differenz zwischen der Empfangsfrequenz des Signals und der vorbestimmten Referenzempfangsfrequenz zu bestimmen; wobei die Vorrichtung angepasst ist, um unter Berücksichtigung von jedem aufeinanderfolgenden Wert ΔF(t), der zu jedem der N aufeinanderfolgenden Zeitpunkte t bestimmt wird, und unter Berücksichtigung, dass ferner ΔF(t) die folgende theoretische Formel erfüllt, die zu jedem der genannten Zeitpunkte t betrachtet wird

$$\Delta F(t) = \frac{\left\langle \overrightarrow{V_{TX}(t)} - \overrightarrow{V_{sat}(t)} \,\middle|\, \overrightarrow{u_{TxSat}(t)} \right\rangle * f_{UL}(t)}{c} + \frac{\left\langle \overrightarrow{V_{Sat}(t)} - \overrightarrow{V_{RX}(t)} \,\middle|\, \overrightarrow{u_{SatRx}(t)} \right\rangle * f_{DL}(t)}{c}$$

wobei <... | ...>: euklidisches Skalarprodukt;
$\overrightarrow{V_{Tx}(t)}$: Geschwindigkeitsvektor, betrachtet als bekannt, des zweiten Endgeräts (30) zum Zeitpunkt t;
$\overrightarrow{V_{Sat}(t)}$: bekannter Geschwindigkeitsvektor des Satelliten zum Zeitpunkt t;
$\overrightarrow{u_{TxSat}(t)}$: bekannter, einheitlicher Richtungsvektor zwischen dem Satelliten und dem zweiten Endgerät (30) zum Zeitpunkt t;
$f_{UL}(t)$: bekannte Frequenz des Uplinks zum Zeitpunkt t;
c: Lichtgeschwindigkeit im Vakuum;
$\overrightarrow{V_{Rx}(t)}$: der Geschwindigkeitsvektor des ersten Endgeräts (20), das zum als bekannt betrachteten Zeitpunkt t lokalisiert werden soll;
$\overrightarrow{u_{SatRx}(t)}$: unbekannter, einheitlicher Richtungsvektor zwischen dem ersten Endgerät (20) und dem Satelliten zum Zeitpunkt t;
$f_{DL}(t)$: bekannte Frequenz des Downlinks zum Zeitpunkt t;

die Geolokalisierung des ersten Endgeräts (20) zu mindestens einem der Zeitpunkte t, die jener entspricht, auf die der Vektor $\overrightarrow{u_{SatRx}(t)}$ von dem Satelliten zum Zeitpunkt t zeigt, zu bestimmen;
und/oder wobei die Vorrichtung angepasst ist, um für jedes von N der zu aufeinanderfolgenden Zeitpunkten t von dem zweiten Endgerät (20) empfangenen Signale, wobei N größer oder gleich 3 ist, die Laufzeit TT(t) des Signals durch Berechnen der Differenz zwischen dem Empfangszeitpunkt des Signals und dem Sendezeitpunkt zu bestimmen; wobei die Vorrichtung angepasst ist, um unter Berücksichtigung von jedem aufeinanderfolgenden Wert TT(t), der zu jedem der N aufeinanderfolgenden Zeitpunkte t bestimmt wird, und unter Berücksichtigung, dass ferner TT(t) die folgende theoretische Formel erfüllt, die zu jedem der genannten Zeitpunkte t betrachtet wird:

$$TT(t) = \frac{1}{c}\left( \sqrt{(X_{Tx}(t) - X_{Sat}(t))^2 + (Y_{Tx}(t) - Y_{Sat}(t))^2 + (Z_{Tx}(t) - Z_{Sat}(t))^2} \right.$$
$$\left. + \sqrt{(X_{Rx}(t) - X_{Sat}(t))^2 + (Y_{Rx}(t) - Y_{Sat}(t))^2 + (Z_{Rx}(t) - Z_{Sat}(t))^2} \right)$$

wobei:

$(X_{Sat}(t);Y_{Sat}(t);Z_{Sat}(t))$: die bekannten Koordinaten des Satelliten zum Zeitpunkt t;
$(X_{Tx}(t);Y_{Tx}(t);Z_{Tx}(t))$: die unbekannten Koordinaten des ersten Endgeräts (20) zum Zeitpunkt t;
$(X_{Rx}(t),Y_{Rx}(t),Z_{Rx}(t))$: die bekannten Koordinaten des zweiten Endgeräts (30) zum Zeitpunkt t;

Bestimmen der Geolokalisierung des ersten Endgeräts (20) zu mindestens einem der Zeitpunkte t als gleich $(X_{Tx}(t);Y_{Tx}(t);Z_{Tx}(t))$,
**dadurch gekennzeichnet, dass** die Geolokalisierungsvorrichtung (40) angepasst ist, um, iterativ über ein bestimmtes Zeitfenster:

i/ unter Berücksichtigung von jedem bestimmten ersten aufeinanderfolgenden Wert ΔF(t) bzw. jedem während des Fensters bestimmten aufeinanderfolgenden Wert TT(t), Bestimmen der ersten Polynomkoeffizienten eines Polynoms erster Ordnung bzw. eines Polynoms zweiter Ordnung, die die aufeinanderfolgenden Werte ergeben;
ii/ in dem Fenster und für eine erste Geolokalisierungshypothese des zu lokalisierenden Endgeräts, Berechnen der theoretischen Werte ΔF(t), TT(t) mittels der entsprechenden theoretischen Formel und Bestimmen der zweiten Polynomkoeffizienten eines Polynoms erster Ordnung bzw. eines Polynoms zweiter Ordnung, die die berechneten Werte ergeben;

iii/ Berechnen des Werts eines Wahrscheinlichkeitsschätzers für diese erste Geolokalisierungshypothese; Vergleichen der ersten und der zweiten Koeffizienten miteinander und Bestimmen einer Bewegung anhand der ersten Geolokalisierungshypothese basierend auf dem Vergleich;

iv/ Wiederholen der vorherigen Schritte mit der neuen Geolokalisierungshypothese, die infolge der Bewegung bestimmt wird;

v/ Auswählen der Geolokalisierung, die einem Minimum des Wahrscheinlichkeitsschätzers entspricht.

**9.** Geolokalisierungsvorrichtung (40) nach einem der Ansprüche 7 oder 8, die bei der Bestimmung der Geolokalisierung des ersten Endgeräts (20) dazu angepasst ist, um das Gleichungssystem oder deren zeitlichen Ableitungen davon, definiert durch die N Gleichheiten zwischen jedem aufeinanderfolgenden Wert ΔF(t) oder TT(t), der zu jedem der aufeinanderfolgenden Zeitpunkte t bestimmt wird, und der entsprechenden theoretischen Formel, die zum Zeitpunkt t betrachtet wird, zu lösen;

und/oder bei der Bestimmung der Geolokalisierung des ersten Endgeräts (20), um eine iterative Lokalisierung durchzuführen, gemäß der:

i/ ein Netz des Satellitenabdeckungsbereichs, das zuvor mit einer Zuordnung an jedem Punkt des Netzes mit einem vorberechneten Profil, das die zeitliche Entwicklung von ΔF(t), wie durch die theoretische Formel definiert, oder einer zeitlichen Ableitung von ΔF(t) gibt, bzw. mit einem vorberechneten Profil, das die zeitliche Entwicklung von TT(t), wie durch die theoretische Formel definiert, gibt, erstellt wurde, oder einer zeitlichen Ableitung von TT(t), wobei die Vorrichtung angepasst ist, um die vorberechneten Profile in mindestens einem Teil des assoziierten Bereichs und dem durch die aufeinanderfolgenden bestimmten Werte ΔF(t) oder durch seine zeitliche Ableitung von ΔF(t) beschriebenen Profil bzw. dem durch die bestimmten Werte TT(t) oder durch eine zeitliche Ableitung von TT(t) beschriebenen Profil erfolgt, zu vergleichen;

ii/ die Vorrichtung angepasst ist, um als Geolokalisierungspunkt des ersten Endgeräts (20) für die aktuelle Iteration, den Punkt des Netzes, der mit dem vorberechneten Profil assoziiert ist, das abhängig von dem Vergleich als das nächstliegende der verglichenen vorberechneten Profile bestimmt wird, zu bestimmen; und

iii/ bei der nächsten Iteration die Vorrichtung angepasst ist, um die Vorgänge i und ii innerhalb eines Teilabdeckungsbereichs um den genannten Geolokalisierungspunkt mit einem feineren Netz als das zuvor betrachtete Netz zu wiederholen.

## Claims

**1.** A method of geolocating a first satellite telecommunications terminal (20) as a function of signals exchanged by said first telecommunications terminal (20), on a satellite telecommunications link (3, 4) via a transparent passing satellite (10), with a second satellite telecommunications terminal (30) whose location is known; said method being **characterised in that** it comprises at least one set of steps from among the following first and second sets of steps implemented in an electronic geolocation calculation module (40), such as according to the first set of steps:

- for each of N signals received at successive times t by the second terminal (30) and given the predetermined reference reception frequency ($f_{DL}$) of the signals, N being greater than or equal to 3, determination (101) of the frequency variation ΔF(t) of the received signal due to the Doppler effect by calculating the difference between the reception frequency of said signal and the predetermined reference reception frequency;

- considering each successive value ΔF(t) determined at each of the N successive instants t and considering that in addition ΔF(t) satisfies the following theoretical formula considered at each of the said times t:

$$\Delta F(t) = \frac{\left\langle \overrightarrow{V_{TX}(t)} - \overrightarrow{V_{sat}(t)} \mid \overrightarrow{u_{TxSat}(t)} \right\rangle * f_{UL}(t)}{c} + \frac{\left\langle \overrightarrow{V_{Sat}(t)} - \overrightarrow{V_{RX}(t)} \mid \overrightarrow{u_{SatRx}(t)} \right\rangle * f_{DL}(t)}{c}$$

with:

<... | ...>: Euclidean scalar product;

$\overrightarrow{V_{Tx}(t)}$: the velocity vector of the first terminal (20) to be located on time t, considered to be known;

$\overrightarrow{V_{Sat}(t)}$: known velocity vector of the satellite on time t;

$\overrightarrow{u_{TxSat}(t)}$: unknown unit direction vector between the first terminal (20) and the satellite on time t;

$f_{UL}(t)$: known frequency of the uplink on time t;

c: speed of light in a vacuum;

$\overline{V_{Rx}(t)}$: speed vector, considered to be known, of the second terminal (30) on time t;
$\overline{u_{SatRx}(t)}$: known unit direction vector between the satellite and the second terminal (30) on time t;
$f_{DL}(t)$: known frequency of the downlink on time t;

determining (103) the geolocation of the first terminal (20) on at least one of said times t, corresponding to the time from which the vector $\overline{u_{TxSat}(t)}$ points to the satellite;
and such that according to the second set of steps:

- for each of N signals received at successive times t by the second terminal (30), N being greater than or equal to 3, determination (101) of the transit time TT(t) of the signal by calculating the difference between the time of reception of said signal and the time of emission;
- considering each successive value TT(t) determined at each of the N successive times t and considering that in addition TT(t) satisfies the following theoretical formula considered at each of the said times t:

$$TT(t) = \frac{1}{c}\left(\sqrt{(X_{Tx}(t) - X_{Sat}(t))^2 + (Y_{Tx}(t) - Y_{Sat}(t))^2 + (Z_{Tx}(t) - Z_{Sat}(t))^2}\right.$$
$$\left. + \sqrt{(X_{Rx}(t) - X_{Sat}(t))^2 + (Y_{Rx}(t) - Y_{Sat}(t))^2 + (Z_{Rx}(t) - Z_{Sat}(t))^2}\right)$$

with:

$(X_{Sat}(t); Y_{Sat}(t); Z_{Sat}(t))$: the known coordinates of the satellite on time t;
$(X_{Tx}(t); Y_{Tx}(t); Z_{Tx}(t))$: the unknown coordinates of the first terminal (20) on time t;
$(X_{Rx}(t); Y_{Rx}(t), Z_{Rx}(t))$: the known coordinates of the second terminal (30) on time t;

determining (103) the geolocation of the first terminal (20) on at least one of said times t as being equal to $(X_{Tx}(t); Y_{Tx}(t); Z_{Tx}(t))$,
**characterised in that** the electronic geolocation calculation module (40) iteratively implements the following steps over a given time window:

i/ considering each first successive value ΔF(t) determined, respectively each successive value TT(t) determined during the window, determine the first polynomial coefficients of a polynomial of the first order, respectively of a polynomial of the second order, giving said successive values;
ii/ on the said window, and for a first geolocation hypothesis of the said terminal to be located, calculating the theoretical values ΔF(t), TT(t) using the corresponding theoretical formula and determining the second polynomial coefficients of a first-order polynomial, respectively of a second-order polynomial, giving the said calculated values;
iii/ calculating the value of a likelihood estimator for this first geolocation hypothesis; comparing the first and second coefficients with each other and determining a displacement on the basis of the first geolocation hypothesis as a function of the said comparison;
iv/ repeat the previous steps with the new geolocation hypothesis thus determined following the said move;
v/ choose the geolocation corresponding to a minimum of the likelihood estimator.

2. A method of geolocating a first telecommunications terminal (20) as a function of signals exchanged by said first telecommunications terminal (20), over a satellite telecommunications link via a transparent passing satellite (10), with a second telecommunication terminal (30) whose location is known; said method being **characterised in that** it comprises at least one set of steps from among the following first and second subsets of steps implemented in an electronic geolocation calculation module, such that according to the first sub-set of steps:

- for each of N signals received at successive times t by the first terminal (20) and given the predetermined reference reception frequency ($f_{DL}$) of the signals, N being greater than or equal to 3, determination (101) of the frequency variation ΔF(t) of the received signal due to the doppler effect by calculating the difference between the reception frequency of said signal and the predetermined reference reception frequency;
- considering each successive value ΔF(t) determined at each of the N successive times t and considering that in addition ΔF(t) satisfies the following theoretical formula considered at each of the said times t

$$\Delta F(t) = \frac{\left\langle \overrightarrow{V_{TX}(t)} - \overrightarrow{V_{sat}(t)} \mid \overrightarrow{u_{TxSat}(t)} \right\rangle * f_{UL}(t)}{c} + \frac{\left\langle \overrightarrow{V_{Sat}(t)} - \overrightarrow{V_{RX}(t)} \mid \overrightarrow{u_{SatRx}(t)} \right\rangle * f_{DL}(t)}{c}$$

with <... | ...>: Euclidean scalar product;

$\overrightarrow{V_{TX}(t)}$: speed vector, considered to be known, of the second terminal (30) on time t;

$\overrightarrow{V_{Sat}(t)}$: known velocity vector of the satellite on time t;

$\overrightarrow{u_{TxSat}(t)}$: known unit direction vector between the satellite and the second terminal (30) on time t;

$f_{UL}(t)$: known frequency of the uplink on time t;

c: speed of light in a vacuum;

$\overrightarrow{V_{RX}(t)}$: the velocity vector of the first terminal (20) to be located on time t, considered to be known;

$\overrightarrow{u_{SatRx}(t)}$: unknown unit direction vector between the first terminal (20) and the satellite on time t;

$f_{DL}(t)$: known frequency of the downlink on time t;

determining (103) the geolocation of the first terminal (20) on at least one of the said times t corresponding to that to which the vector $\overrightarrow{u_{SatRx}(t)}$ points from the satellite on time t;

and according to the second subset of steps:

- for each of N signals received at successive times t by the first terminal (20), N being greater than or equal to 3, determination (101) of the transit time TT(t) of the signal by calculating the difference between the time of reception of said signal and the time of emission;
- considering each successive value TT(t) determined at each of the N successive times t and considering that in addition TT(t) satisfies the following theoretical formula considered at each of the said times t:

$$TT(t) = \frac{1}{c}\left( \sqrt{(X_{Tx}(t) - X_{Sat}(t))^2 + (Y_{Tx}(t) - Y_{Sat}(t))^2 + (Z_{Tx}(t) - Z_{Sat}(t))^2} \right.$$
$$\left. + \sqrt{(X_{Rx}(t) - X_{Sat}(t))^2 + (Y_{Rx}(t) - Y_{Sat}(t))^2 + (Z_{Rx}(t) - Z_{Sat}(t))^2} \right)$$

with:

$(X_{Sat}(t);Y_{Sat}(t);Z_{Sat}(t))$: the known coordinates of the satellite on time t;

$(X_{Tx}(t);Y_{Tx}(t);Z_{Tx}(t))$: the unknown coordinates of the first terminal (20) on time t;

$(X_{Rx}(t);Y_{Rx}(t),Z_{Rx}(t))$: the known coordinates of the second terminal (30) on time t;

determining (103) the geolocation of the first terminal (20) on at least one of said times t as being equal to $(X_{Tx}(t);Y_{Tx}(t);Z_{Tx}(t))$,

**characterised in that** the electronic geolocation calculation module (40) iteratively implements the following steps over a given time window:

i/ considering each first successive value ΔF(t) determined, respectively each successive value TT(t) determined during the window, determine the first polynomial coefficients of a polynomial of the first order, respectively of a polynomial of the second order, giving said successive values;

ii/ on the said window, and for a first geolocation hypothesis of the said terminal to be located, calculating the theoretical values ΔF(t), TT(t) using the corresponding theoretical formula and determining the second polynomial coefficients of a first-order polynomial, respectively of a second-order polynomial, giving the said calculated values;

iii/ calculating the value of a likelihood estimator for this first geolocation hypothesis; comparing the first and second coefficients with each other and determining a displacement on the basis of the first geolocation hypothesis as a function of the said comparison;

iv/ repeat the previous steps with the new geolocation hypothesis thus determined following the said move;

v/ choose the geolocation corresponding to a minimum of the likelihood estimator.

3. Geolocation method according to claim 1 or 2, according to which the determination of the geolocation of the first terminal (20) by the electronic geolocation calculation module (40) comprises at least one of the two steps among:

- solving the system of equations, or time derivatives thereof, defined by the N equalities between each successive value ΔF(t) or TT(t), determined at each of the successive instants t and by said corresponding theoretical formula considered at said instant t;
- implementation of an iterative localisation in which:

i/ a mesh of the satellite coverage area having previously been produced with an association at each point of the mesh with a precalculated profile giving the time evolution of ΔF(t) as defined by said theoretical formula, or of a time derivative of ΔF(t), respectively with a precalculated profile giving the time evolution of TT(t) as defined by said theoretical formula, or of a time derivative of TT(t), a comparison is made between the precalculated profiles in at least part of the associated area and the profile described by the successive determined values ΔF(t), or by its temporal derivative of ΔF(t), respectively the profile described by the determined values TT(t), or by a temporal derivative of TT(t);

ii/ the mesh point associated with the precalculated profile determined, as a function of said comparison, to be the closest of the precalculated profiles compared, is determined as the geolocation point of the first terminal (20) for the current iteration; and

iii/ in the next iteration, steps i and ii are repeated within a sub-area of coverage around said geolocation point with a finer mesh than the mesh previously considered.

4. Method of geolocating a first telecommunications terminal (20) according to one of the preceding claims, according to which the said electronic geolocation calculation module is integrated into the one of the first terminal (20) and the second terminal (30) having received the said N signals.

5. Method of geolocating a first telecommunications terminal (20) according to one of the preceding claims, according to which the speed vector of the first terminal (20) is chosen as corresponding to the speed of rotation of the earth.

6. A computer program comprising software instructions which, when run on a processor of an electronic geolocation calculation module, implement a method according to any one of the preceding claims.

7. Geolocation device (40) for a first satellite telecommunication terminal (20) adapted to geolocate said first telecommunication terminal (20) as a function of signals exchangeds by said first terminal (20), on a satellite telecommunications link (3, 4) via a transparent passing satellite (10), with a second satellite telecommunications terminal (30) whose location is known;

said device (40) being **characterised in that** it is adapted, for each of N signals received at successive times t by the second terminal (30) and given the predetermined reference reception frequency ($f_{DL}$) of the signals, N being greater than or equal to 3, to determine the frequency variation ΔF(t) of the received signal due to Doppler effect by calculating the difference between the reception frequency of said signal and the predetermined reference reception frequency; and said device (40) being adapted in order, considering each successive ΔF(t) value calculated at each of the N successive instants t and considering further that ΔF(t) satisfies the following theoretical formula considered at each of said instants t:

$$\Delta F(t) = \frac{\left\langle \overrightarrow{V_{TX}(t)} - \overrightarrow{V_{sat}(t)} \middle| \overrightarrow{u_{TxSat}(t)} \right\rangle * f_{UL}(t)}{c} + \frac{\left\langle \overrightarrow{V_{Sat}(t)} - \overrightarrow{V_{RX}(t)} \middle| \overrightarrow{u_{SatRx}(t)} \right\rangle * f_{DL}(t)}{c}$$

with:

<... | ...>: Euclidean scalar product;
$\overrightarrow{V_{TX}(t)}$: the velocity vector of the first terminal (20) to be located on time t, considered to be known;
$\overrightarrow{V_{Sat}(t)}$: known velocity vector of the satellite on time t;
$\overrightarrow{u_{TxSat}(t)}$: unknown unit direction vector between the first terminal (20) and the satellite on time t;
$f_{UL}(t)$: known frequency of the uplink on time t;
c: speed of light in a vacuum;
$\overrightarrow{V_{RX}(t)}$: speed vector, considered to be known, of the second terminal (30) on time t;
$\overrightarrow{u_{SatRx}(t)}$: known unit direction vector between the satellite and the second terminal (30) on time t;
$f_{DL}(t)$: known frequency of the downlink on time t;

determining the geolocation of the first terminal (20) on at least one of the said times t, corresponding to the time on which the vector $\overrightarrow{u_{Txsat}(t)}$ points towards the satellite;

and/or said device being **characterised in that** it is adapted, for each of N of the signals received at successive instants t by the second terminal (30), N being greater than or equal to 3, to determine the transit time TT(t) of the signal by calculating the difference between the instant of reception of said signal and the instant of emission; said device being adapted in order, considering each successive value TT(t) calculated at each of the N successive times t and considering further that TT(t) verifies the following theoretical formula considered at each of said times t:

$$TT(t) = \frac{1}{c}\left(\sqrt{(X_{Tx}(t) - X_{Sat}(t))^2 + (Y_{Tx}(t) - Y_{Sat}(t))^2 + (Z_{Tx}(t) - Z_{Sat}(t))^2}\right.$$

$$\left. + \sqrt{(X_{Rx}(t) - X_{Sat}(t))^2 + (Y_{Rx}(t) - Y_{Sat}(t))^2 + (Z_{Rx}(t) - Z_{Sat}(t))^2}\right)$$

with:

$(X_{Sat}(t);Y_{Sat}(t);Z_{Sat}(t))$: the known coordinates of the satellite on time t;
$(X_{Tx}(t);Y_{Tx}(t);Z_{Tx}(t))$: the unknown coordinates of the first terminal (20) on time t;
$(X_{Rx}(t);Y_{Rx}(t);Z_{Rx}(t))$: the known coordinates of the second terminal (30) on time t;

determining the geolocation of the first terminal (20) on at least one of said times t as being equal to $(X_{Tx}(t);Y_{Tx}(t);Z_{Tx}(t))$,
**characterised in that** the geolocation device (40) is adapted to iterate over a given time window:

i/ considering each first successive value ΔF(t) determined, respectively each successive value TT(t) determined during the window, determine the first polynomial coefficients of a polynomial of the first order, respectively of a polynomial of the second order, giving said successive values;
ii/ on the said window, and for a first geolocation hypothesis of the said terminal to be located, calculating the theoretical values ΔF(t), TT(t) using the corresponding theoretical formula and determining the second polynomial coefficients of a first-order polynomial, respectively of a second-order polynomial, giving the said calculated values;
iii/ calculating the value of a likelihood estimator for this first geolocation hypothesis; comparing the first and second coefficients with each other and determining a displacement on the basis of the first geolocation hypothesis as a function of the said comparison;
iv/ repeat the previous steps with the new geolocation hypothesis thus determined following the said move;
v/ choose the geolocation corresponding to a minimum of the likelihood estimator.

8. Geolocation device (40) for a first telecommunications terminal (20), adapted to geolocate said first telecommunications terminal (20) following signals exchanged by said first terminal (20), on a satellite telecommunications link via a transparent passing satellite (10), with a second telecommunications terminal (30) whose location is known;

said device being **characterised in that** it is adapted, for each of N signals received at successive times t by the first terminal (20) and given the predetermined reference reception frequency ($f_{DL}$) of the signals, N being greater than or equal to 3, to determine the frequency variation ΔF(t) of the received signal due to Doppler effect by calculating the difference between the reception frequency of said signal and the predetermined reference reception frequency; said device being adapted to, considering each successive value ΔF(t) determined at each of the N successive times t and considering further that ΔF(t) verifies the following theoretical formula considered at each of said times t

$$\Delta F(t) = \frac{\left\langle\overrightarrow{V_{TX}(t)} - \overrightarrow{V_{sat}(t)} \middle| \overrightarrow{u_{TxSat}(t)}\right\rangle * f_{UL}(t)}{c} + \frac{\left\langle\overrightarrow{V_{Sat}(t)} - \overrightarrow{V_{RX}(t)} \middle| \overrightarrow{u_{SatRx}(t)}\right\rangle * f_{DL}(t)}{c}$$

with <... | ...>: Euclidean scalar product;
$\overrightarrow{V_{TX}(t)}$: speed vector, considered to be known, of the second terminal (30) on time t;
$\overrightarrow{V_{Sat}(t)}$: known velocity vector of the satellite on time t;
$\overrightarrow{u_{TxSat}(t)}$: known unit direction vector between the satellite and the second terminal (30) on time t;
$f_{UL}(t)$: known frequency of the uplink on time t;

c: speed of light in a vacuum;

$\overline{V_{Rx}(t)}$: the velocity vector of the first terminal (20) to be located on time t, considered to be known;

$\overline{u_{SatRx}(t)}$: unknown unit direction vector between the first terminal (20) and the satellite on time t;

$f_{DL}(t)$: known frequency of the downlink on time t;

determine the geolocation of the first terminal (20) on at least one of the said times t corresponding to that to which the vector $\overline{u_{SatRx}(t)}$ points from the satellite on time t;

and/or said device being adapted, for each of N of the signals received at successive instants t by the first terminal (20), N being greater than or equal to 3, to determine the transit time TT(t) of the signal by calculating the difference between the instant of reception of said signal and the instant of transmission; said device being adapted in order, considering each successive value TT(t) determined at each of the N successive instants t and considering further that TT(t) verifies the following theoretical formula considered at each of said instants t:

$$TT(t) = \frac{1}{c}\left(\sqrt{(X_{Tx}(t) - X_{Sat}(t))^2 + (Y_{Tx}(t) - Y_{Sat}(t))^2 + (Z_{Tx}(t) - Z_{Sat}(t))^2}\right.$$
$$\left. + \sqrt{(X_{Rx}(t) - X_{Sat}(t))^2 + (Y_{Rx}(t) - Y_{Sat}(t))^2 + (Z_{Rx}(t) - Z_{Sat}(t))^2}\right)$$

with:

$(X_{Sat}(t);Y_{Sat}(t);Z_{Sat}(t))$: the known coordinates of the satellite on time t;

$(X_{Tx}(t);Y_{Tx}(t);Z_{Tx}(t))$: the unknown coordinates of the first terminal (20) on time t;

$(X_{Rx}(t),Y_{Rx}(t),Z_{Rx}(t))$: the known coordinates of the second terminal (30) on time t;

determining the geolocation of the first terminal (20) on at least one of said times t as being equal to $(X_{Tx}(t);Y_{Ts}(t);Z_{Tx}(t))$

**characterised in that** the geolocation device (40) is adapted to iterate over a given time window:

i/ considering each first successive value ΔF(t) determined, respectively each successive value TT(t) determined during the window, determine the first polynomial coefficients of a polynomial of the first order, respectively of a polynomial of the second order, giving said successive values;

ii/ on the said window, and for a first geolocation hypothesis of the said terminal to be located, calculating the theoretical values ΔF(t), TT(t) using the corresponding theoretical formula and determining the second polynomial coefficients of a first-order polynomial, respectively of a second-order polynomial, giving the said calculated values;

iii/ calculating the value of a likelihood estimator for this first geolocation hypothesis; comparing the first and second coefficients with each other and determining a displacement on the basis of the first geolocation hypothesis as a function of the said comparison;

iv/ repeat the previous steps with the new geolocation hypothesis thus determined following the said move;

v/ choose the geolocation corresponding to a minimum of the likelihood estimator.

9. Geolocation device (40) according to one of claims 7 or 8, adapted, in determining the geolocation of the first terminal (20), to solve the system of equations, or temporal derivatives thereof, defined by the N equalities between each successive value ΔF(t) or TT(t), determined at each of the successive times t and by the said corresponding theoretical formula considered at the said time t;

and/or in determining the geolocation of the first terminal (20), to implement an iterative location according to which:

i/ a mesh of the satellite coverage area having previously been produced with an association at each point of the mesh with a precalculated profile giving the time evolution of ΔF(t) as defined by said theoretical formula, or of a time derivative of ΔF(t), respectively with a precalculated profile giving the time evolution of TT(t) as defined by said theoretical formula, or of a time derivative of TT(t), the device is adapted to compare the precalculated profiles in at least part of the associated zone and the profile described by the successive determined values ΔF(t), or by its temporal derivative of ΔF(t), respectively the profile described by the determined values TT(t), or by a temporal derivative of TT(t);

ii/ the device is adapted to determine, as the geolocation point of the first terminal (20) for the current iteration, the point of the mesh associated with the precalculated profile determined, as a function of said comparison, to be the closest of the precalculated profiles compared; and

iii/ at the next iteration, the device is adapted to repeat operations i and ii within a sub-area of coverage around said geolocation point with a finer mesh than the mesh previously considered.

**FIG.1**

FIG.2

FIG.3

100

DF($t_n$) , DTT($t_n$)

n = 1,...,N

——101

ALG

——102

LOC

——103

## FIG.4

**FIG.5**

FIG.6

## RÉFÉRENCES CITÉES DANS LA DESCRIPTION

**Documents brevets cités dans la description**

- US 2018095156 A1
- WO 2019005436 A1
- US 6028551 A
- EP 2784534 A1